(19) Europäisches Patentamt / European Patent Office / Office européen des brevets

(11) **EP 4 197 653 B1**

(12) **EUROPEAN PATENT SPECIFICATION**

(45) Date of publication and mention
of the grant of the patent:
**28.08.2024 Bulletin 2024/35**

(21) Application number: **22213114.6**

(22) Date of filing: **13.12.2022**

(51) International Patent Classification (IPC):
*G10K 15/04* (2006.01)    *B06B 1/04* (2006.01)
*B01J 3/00* (2006.01)    *B01J 19/00* (2006.01)

(52) Cooperative Patent Classification (CPC):
**B06B 1/045; B01J 3/006; B01J 19/008;
G10K 15/043**

(54) **CAVITATION SYSTEM AND GENERATOR**

KAVITATIONSSYSTEM UND GENERATOR

SYSTÈME DE CAVITATION ET GÉNÉRATEUR

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **14.12.2021 LU 501013**

(43) Date of publication of application:
**21.06.2023 Bulletin 2023/25**

(73) Proprietor: **Univerza V Ljubljani
1000 Ljubljana (SI)**

(72) Inventors:
  • **Gostisa, Jurij
    1000 Ljubljana (SI)**
  • **Sirok, Brane
    1000 Ljubljana (SI)**

  • **Zupanc, Mojca
    1000 Ljubljana (SI)**
  • **Bizjan, Benjamin
    1000 Ljubljana (SI)**
  • **Dular, Matevz
    1000 Ljubljana (SI)**
  • **Rihar, Andraz
    1000 Ljubljana (SI)**
  • **Voncina, Danjel
    1000 Ljubljana (SI)**
  • **Lavric, Henrik
    1000 Ljubljana (SI)**

(74) Representative: **Zacco GmbH
Bayerstrasse 83
80335 München (DE)**

(56) References cited:
  **US-A1- 2006 159 560    US-A1- 2015 336 067**

**Description**

The disclosed technology relates to a cavitation system comprising a cavitation generator and a housing including a cavitation chamber, wherein the system is configured to induce hydrodynamic cavitation in a liquid held in the cavitation chamber using at least one piston comprising at least one permanent magnet which is driven by an electromagnetic coil arrangement bi-directionally through the liquid in the cavitation chamber and to related aspects.

In particular, but not exclusively, the disclosed technology relates to an electromagnetically controlled cavitation generator for hydrodynamic cavitation where cavitation is induced within a cavitation chamber holding a liquid. Electromagnetic fields are used to accelerate a permanent magnet piston within the cavitation chamber so that when the permanent magnet piston collides with the end walls of the cavitation chamber shockwaves are generated. These shockwaves, in combination with liquid vapour jets generated at the aperture of the permanent magnet piston as it moves through the liquid within the cavitation chamber, result in a high degree of cavitation compared to known systems.

The disclosed technology is particularly suitable for processing small volumes of liquids as laboratory sized samples, i.e., around 10 ml or so, for applications such as disinfection, homogenization, particle size reduction, cell membrane disruption etc., and due to having only one moving part, the piston, within the cavitation chamber, can be easily cleaned and/or disinfected before cavitating a different liquid sample.

BACKGROUND

Mechanical, thermal and chemical effects of hydrodynamic cavitation have been shown to disinfect, for example by inactivating bacteria and viruses. In addition, the high shear stress that occurs during hydro-dynamically induced cavitation is a known mechanism of homogenization. One of the main advantages of cavitation is that no additional chemicals need to be introduced into the sample and therefore no side product contaminants occur in the processed sample. Therefore, cavitation is considered as one of the green oxidation processes.

Magnetically driven pistons in a closed cavity are known for a variety of fluid transport applications or as hydraulic actuators where electrically stored energy is transferred into hydraulic power. The disclosed technology seeks to improve the cavitation generation known in the art, such as those disclosed in US4511254 and US7547133 to provide very high levels of cavitation, and especially to improve the levels of cavitation induced in small volumes of liquid, such as may be used in medical sampling. In particular, the disclosed technology seeks to provide a cavitation chamber for a cavitation generator which has only one moving part and so which reduces the number of parts which require cleaning and/or sterilizing after cavitation has been induced in a liquid held within the cavitation chamber. The disclosed technology also provides a cavitation system, which uses cavitation chambers, which are easy to fill and discharge with a liquid to be cavitated.

United States Patent Application US2015336067 entitled "Cavitation generation mechanisms and their use in fermentation and wastewater and sand cleaning processes" discloses different examples of technical machines for hydrodynamic cavitation generation on a large scale for various processes, including a machine 1 which is a device for magnetic cavitation generation. One process is cavitation biodiesel process. The second process is a cavitation polyester (PET) generating process. The third process is a cavitation wastewater treatment process. The fourth process is cavitation oil sands extraction process.

United States Patent Application US2006159560 entitled "Hydraulic actuated cavitation chamber with integrated fluid rotation system" discloses a cavitation system for forming and imploding stabilized cavities within a cavitation chamber. The system includes a hydraulically actuated driver coupled to the cavitation chamber. A cavitation piston, coupled to a hydraulic piston, forms the desired cavities during piston retraction and then implodes the cavities during piston extension. An impeller assembly with at least one impeller located within the cavitation chamber is used to stabilize the cavities. Preferably the cavitation fluid is degassed prior to hydraulically driving cavitation within the chamber, the degassing performed either within the cavitation chamber or within a separate degassing chamber or system. In one aspect, a coupling sleeve is interposed between the hydraulic driver and the cavitation chamber, the coupling sleeve housing at least a portion of the cavitation piston drive rod. Preferably the coupling sleeve can be evacuated.

SUMMARY STATEMENTS

The invention is defined by the accompanying claims. The disclosed technology includes example embodiments of the invention and may also include one or more examples of features relevant to understanding the invention and in addition or instead one or more examples of features relating to one or more contexts of use of the invention. The disclosed embodiments relate to a cavitation system comprising a cavitation generator for inducing hydrodynamic cavitation in a liquid and a cavitation chamber holding the liquid to be cavitated. In some embodiments, the cavitation generator has an integrated housing with a cavitation chamber, which is filled in situ with liquid samples to be cavitated. In other embodiments, the cavitation generator is configured to receive a housing with a cavitation chamber, which is prefilled with a liquid to be cavitated, which facilitates more rapid transfer of liquid samples as the cavitation chamber does not need to be cleaned in situ before the next sample is cavitated.

A first aspect of the disclosed technology relates to a cavitation system for inducing hydrodynamic cavitation in a liquid held in a cavitation chamber, the cavitation system comprising a cavitation generator having a ferromagnetic core, a housing for a cavitation chamber, and a cavitation chamber holding liquid for cavitation using at least one piston comprising at least one permanent magnet, wherein the cavitation generator comprises a bipolar pulse current controller, at least two electromagnetic coils arranged to accommodate between them the housing including the cavitation chamber, wherein at least one electromagnetic coil is configured to generate an electromagnetic field at one end of the cavitation chamber when in the housing and at least one electromagnetic coil is configured to generate an electromagnetic field at the other end of the cavitation chamber, and wherein the bipolar pulse controller is configured to generate bipolar current pulses, which alternate the polarity of the electromagnetic fields, generating electromagnetic force, wherein the electromagnetic force drives the permanent magnet piston into linear motion bi-directionally between the one end and the other, opposite, end of the cavitation chamber through the liquid held in the cavitation chamber to induce cavitation in the liquid, and wherein the cavitation chamber comprises:

a container holding the liquid;
an inlet for introducing the liquid into the container, wherein the configuration of the inlet allows liquid to enter the container but not to escape via the inlet;
an outlet for removing liquid or gas from the container, wherein the configuration of the outlet prevents liquid and gas which have escaped from the container from returning; and
at least one permanent magnet piston for inducing cavitation in the liquid,
wherein the cavitation chamber is configured with two end-walls, one end-wall being provided at the one end of the cavitation chamber and the other end-wall being provided at the other, opposite, end (16b) of the cavitation chamber, and
wherein each of the at least one permanent magnet piston is configured to cause cavitation in the liquid held in the cavitation chamber when driven by electromagnetic fields of the cavitation generator into linear movement between the end-walls of the cavitation chamber.

According to the invention, the cavitation generator for inducing hydrodynamic cavitation in a liquid comprises a bipolar pulse current controller, and at least two electromagnetic coils arranged to accommodate between them a housing for a cavitation chamber including a permanent magnet piston, wherein at least one electromagnetic coil is configured to generate an electromagnetic field at one end of a longitudinal axis of the cavitation chamber of an accommodated housing and at least one electromagnetic coil is configured to generate an electromagnetic field at the other end of the longest axis of the cavitation chamber, wherein the controller is configured to alternate the polarity of the electromagnetic fields generated by the electromagnetic coils to drive the piston into linear motion bi-directionally along the longest axis, for example, a longitudinal axis, between each end of the cavitation chamber through a liquid held in the cavitation chamber.

In some embodiments, in use of the cavitation generator, the liquid fully occupies the cavitation chamber.

In some embodiments, the controller is a bi-directional or bipolar pulse current controller for generating current pulses which may have any suitable shape including rectangular.

The bipolar pulse current controller provides a bipolar adjustable pulse current source, which generates both positive and negative current pulses. The positive and negative current pulses generate electromagnetic forces, which cause the piston, or each piston if more than one, which is a permanent magnet piston, to be moved in each direction between each end-wall of the cavitation chamber, for example, along a longitudinal axis or in other words, along the longest axis of the cavitation chamber. Advantageously, the bipolar pulse current controller provides adjustable pulse timing and pulse amplitude in some embodiments, which enables more precise control over the cavitation process. The larger the pulse amplitude the more the piston is accelerated and decelerated between the end walls of the cavitation chamber and the better the cavitation of liquid in the cavitation chamber. By using the bipolar pulse current controller to also adjust the pulse duration, the amount of energy used can be managed to reduce the amount of energy required to achieve a desired or optimal level of cavitation.

In some embodiments, the cavitation chamber may be removable from the cavitation generator.

According to the invention, the piston comprises at least one permanent magnet.

In some embodiments, one electromagnetic coil is used but this is unlikely to be effective for most cavitation requirements.

In some embodiments, the bipolar pulse current controller controls current through the electromagnetic coils to cause the electromagnetic field generated by the at least one electromagnetic coil at one end of the cavitation chamber to repel the piston concurrently with the electromagnetic field at the other end attracting the piston and to cause the electromagnetic field generated by the at least one electromagnetic coil at one end of the cavitation chamber to attract the piston concurrently with the electromagnetic field at the other end repelling the piston.

In some embodiments, the bipolar pulse current controller causes the electromagnetic fields of the electromagnetic coils at both ends of the cavitation chamber to co-operate with each other and cause the piston to accelerate as it moves in each direction between the two ends of the cavitation chamber to a velocity where liquid passing the moving piston generates a liquid jet within the cavitation chamber.

In some embodiments, deceleration of the accelerated piston as it collides with an end wall of the cavitation chamber generates a shockwave in the liquid within the cavitation chamber.

In some embodiments, the cavitation generator further comprises a housing including at least one cavitation chamber. The housing and/or cavitation chamber may be removable in some embodiments from the cavitation generator. However, in some embodiments, the housing and/or cavitation chamber are configured to be fillable with a liquid in situ when accommodated between the electromagnetic coils of the cavitation generator. Advantageously such a configuration of the cavitation chamber of the first aspect which includes the housing with the cavitation chamber being filled with a liquid to be cavitated in situ may enable very small cavitation chambers to be used and so allows very small samples of liquid to be cavitated.

In some embodiments, the housing is configured with a cavitation chamber, which is filled, for example, fully filled, with a liquid before being accommodated between the electromagnetic coils of the cavitation generator. In some embodiments, fully filling the cavitation chamber means expelling any air or other gas from within the cavitation chamber. Moreover, if the liquid samples to be cavitated can be provided form the same source, having a cavitation chamber housed permanently within the cavitation generator is likely to be more efficient in turns of change over between liquid samples than if the cavitation chamber is removed from the housing and cleaned between samples.

In some embodiments, the housing is configured to be fixed within the cavitation generator and only the cavitation chamber is removable. In some embodiments, both the housing and/or the cavitation chamber are removable. Advantageously, in some embodiments where the housing and/or cavitation chamber are removable from the cavitation generator of the first aspect, it may allow for more efficient cavitation of a plurality of different liquid samples. In this case, if the cavitation chamber needs to be cleaned between being used to cavitate different liquid samples, then it may be advantageous to place a cavitation liquid sample in a cavitation chamber whilst another cavitation chamber containing another liquid is cavitated within the cavitation generator. This would then allow for faster changeover between the different liquid samples than could be achieved when the cavitation chamber is housed permanently within the cavitation chamber and has to be cleaned in situ, as a number of cavitation chambers can be swapped in and out and cleaned later (in other words, there is no need to clean each cavitation chamber immediately after use simply to fill it with another liquid sample).

In some embodiments, the cavitation generator further comprises a ferromagnetic core, wherein the ferromagnetic core comprises two yokes, two side limbs and two main limbs, each main limb supporting at least one electromagnetic coil in a manner, which accommodates the housing between the coils.

In some embodiments, the ferromagnetic core further comprises at least two additional magnetic field concentrating elements configured to concentrate the electromagnetic fields generated by the at least two electromagnetic coils around the accommodated housing.

Another, second, aspect of the disclosed technology relates to a cavitation chamber for use with a cavitation generator, the cavitation chamber comprising: a container for a liquid; two end-walls, each end-wall provided at one end of the container, along a longest axis of the container; an inlet for introducing the liquid into the container; an outlet for removing liquid from the container, wherein the outlet is configured to allow liquid and gas to escape from the container but not to return, wherein the inlet is configured to allow liquid to enter the container but not to escape; and a permanent magnet piston, wherein the piston is configured to cause cavitation in a liquid held in the chamber by being driven by electromagnetic fields of a cavitation generator according to the first aspect into linear movement between the end-walls of the container along the longest axis.

In some embodiments, the permanent magnet piston has at least one aperture via which liquid held within the cavitation chamber passes through and emerges as a liquid jet as the piston is driven by the electromagnetic coils to move along the longest axis of the cavitation chamber.

In some embodiments, at least the outlet is configured so that the cavitation generator functions as a liquid self-priming pump.

In some embodiments, liquid held within the cavitation chamber passes through a gap between the piston and an internal surface of the cavitation chamber and emerges as a liquid jet as the piston is driven by the electromagnetic coils to move along the longest axis of the cavitation chamber.

In some embodiments, the outer surface of the piston is configured with grooves forming channels for the liquid to pass through between the piston and the internal surface of the cavitation chamber.

In some embodiments, the cavitation chamber is configured to be filled with a liquid before being placed in the cavitation generator.

In some embodiments, a damper is provided adjacent to each end of the cavitation chamber. Advantageously, the damper increases the pressure fluctuation in the liquid in the cavitation chamber upon collision of the piston with the damper (36). The action of the dampers on the piston thus intensifies and boosts the pressure fluctuation causing the water hammer effect.

In some embodiments, the configuration of the cavitation chamber is configured to induce cavitation in a small sample of liquid in a cavitation chamber. In some embodiments, the small sample of liquid is contained in a cavitation chamber having: a diameter of 10 mm with a volume of more than 4 ml and less than 5 ml; a diameter of 15 mm with a volume of more than 10 ml and less than 11 ml; a diameter of 20 mm with a volume of more than 18 ml and less than 19 ml.

For example, in some embodiments, the same cavitation generator may be used with a variety of different sized cavitation chambers depending on the size and/or type of liquid sample to be cavitated. By way of example, in one embodiment, a cavitation generator is configured to be capable of housing a cavitation chamber with a diameter of 10 mm and a chamber volume of 4.7 ml (where the liquid volume housed is the chamber volume reduced by the volume of the piston placed in the cavitation chamber), or a cavitation chamber with a diameter of 15 mm with a chamber volume of 10.6 ml, or a cavitation chamber of 20 mm diameter and a chamber volume of 18.9 ml. The exact volume of liquid accommodated in each cavitation chamber is reduced by the piston volume housed within the cavitation chamber.

Advantageously, some embodiments of the disclosed technology thus allow very small amounts of liquids to be cavitated, such as may be found in laboratory-based use of the cavitation generator, for example, samples as small as below around 5 ml up to around 100 ml may be cavitated by the cavitation generator in some embodiments.

In some embodiments, a velocity of the piston is controlled by adjusting the electromagnetic field of the electromagnetic coils around the cavitation chamber using a bipolar pulse current controller of a cavitation generator according to the first aspect and/or any of its embodiments. In this way, the rate of change of the jet velocity, in other words, the acceleration of the liquid jet within the liquid, can be controlled by the bipolar pulse current controller so as to generate shockwaves which improve the cavitation of the liquid. This also improves the resulting homogenisation of the liquid in some embodiments and can also improve disinfection in some embodiments. There may also be an improvement in some embodiments in the reduction of particle size in the liquid as a result of the improved cavitation.

Another, third, aspect of the disclosed technology relates to a method of performing batch cavitation in a plurality of liquid samples, the method comprising: filling each of at least one respective cavitation chamber, for example, a cavitation chamber according to any suitable examples of the second aspect or any suitable examples of the disclosed embodiments of such a cavitation chamber, with a liquid sample, positioning a housing including the filled cavitation chamber between electromagnetic coils of a cavitation generator according to the first aspect or any of the disclosed embodiments of a cavitation generator, and controlling a current through the electromagnetic coils using the bipolar pulse current controller of the cavitation generator, wherein the current is controlled so that sufficient force is applied to each piston in each respective cavitation chamber to accelerate the piston.

In some embodiments, each of the at least one cavitation chambers is located within the housing when the cavitation chamber is filled, for example, along the longest axis of the housing. Alternatively or instead, in some embodiments, each of the at least one cavitation chambers is placed within the housing after the cavitation chamber is filled.

An example of a suitable housing for the cavitation chamber is any suitable structure that supports the cavitation chamber in the cavitation generator in the correct position for the magnetic coils to cause efficient acceleration of the piston.

Another aspect seeks to provide a method of performing cavitation in a plurality of liquid samples which comprises: placing at least one cavitation chambers in a housing; positioning the housing between electromagnetic coils of a cavitation generator according to the first aspect; filling each of at least one respective cavitation chamber with a liquid sample; and controlling a current through the electromagnetic coils using the controller of the cavitation generator, wherein the current is controlled so that sufficient force is applied to each piston in each respective cavitation chamber to accelerate the piston.

Advantageously, the accelerating motion causes cavitation in the liquid sample which is enhanced when the piston collides with an end wall of the cavitation chamber where it decelerates and causes shockwaves. Advantageously, by generating vapour jets and pressure shockwaves as the piston collides with each end wall of the cavitation chamber, a water hammer effect occurs which increases the amount of cavitation in the liquid. By improving the degree of cavitation in the liquid, mechanical, thermal and chemical disintegration of any contaminants or other impurities in the liquid held within the cavitation chamber may be increased.

In some example embodiments, the cavitation generator comprises a permanent magnet piston enclosed in a tubular or cylindrical cavity, which forms a cavitation chamber holding a liquid where one or more electromagnetic coils drive the piston along the axis of the cavity between the ends of the cavity. Different configurations of chamber and piston may also be used in some embodiments.

BRIEF DESCRIPTION OF THE DRAWINGS

Various example embodiments of the disclosed technology is described with reference to the accompanying drawings which are by way of example only and are not intended to be limiting. In the drawings:

Figure 1A shows schematically a three dimensional representation of an example embodiment of a cavitation generator according to some embodiments of the disclosed technology;
Figures 1B shows schematically a two dimensional representation of the example cavitation generator of Figure 1A generator having a vertical orientation in use;

Figure 2A shows schematically a two dimensional representation of an example embodiment of a cavitation generator according to some embodiments of the disclosed technology;

Figures 2B and 2C shows schematically another two dimensional representation of another example embodiment of a cavitation generator according to some embodiments of the disclosed technology;

Figure 3A shows schematically a three-dimensional view of an example embodiment of a housing with a cavitation chamber for generating cavitation in a liquid according to some embodiments of the disclosed technology;

Figure 3B shows schematically a two-dimensional view of the example housing shown in Figure 3A;

Figure 4A shows schematically an example circuit diagram for the electromagnetic coil excitation control and illustrating the coil connection configuration according to some embodiments of the disclosed technology;

Figure 4B shows an example pulse waveform of the resulting time curve of the current generated by the circuit shown in Figure 4A;

Figure 5A shows an end view of an example piston according to some embodiments of the disclosed technology;

Figure 5B shows examples liquid flow velocities through the central aperture of the example piston of Figure 5A;

Figures 5C and 5D show alternative examples of an internal aperture configuration of a piston according to some embodiments of the disclosed technology;

Figures 6 and 7 show schematically first and second examples respectively of the mechanism of generation of cavitation jets and shock waves in some example embodiments of the disclosed hydrodynamic cavitation generator;

Figures 8A and 8B show schematically first and second examples respectively of a damper configuration in a cavitation chamber of a housing of a cavitation generator according to some embodiments of the disclosed technology;

Figure 9A shows schematically a magnetic field orientation generated by a first example of a cavitation generator having a ferromagnetic core according to the disclosed technology;

Figure 9B shows schematically how the magnetic flux density of the example cavitation generator of Figure 9A is distributed along the structure and around the piston;

Figure 10A shows schematically a magnetic field orientation generated by a second example of a cavitation generator having a ferromagnetic core upgraded with field concentrators (attached to the side limbs) according to the disclosed technology;

Figure 10B shows schematically how the magnetic flux density of the example cavitation generator of Figure 10A is distributed;

Figure 11A shows schematically a magnetic field distribution generated by a third example of a cavitation generator having a ferromagnetic core upgraded with field concentrators, and secondary windings according to the disclosed technology;

Figure 11B shows schematically how the magnetic flux density of the example cavitation generator of Figure 11A is distributed;

Figure 12 shows schematically an example of a current waveform through the electromagnetic coils of an example embodiment of a cavitation generator and pressure in the liquid in which cavitation is being induced according to some embodiments of the disclosed technology;

Figure 13 shows schematically an example acceleration curve for a piston of an example embodiment of a cavitation generator;

Figure 14A shows schematically examples of liquid jet velocity through piston apertures of various dimensions;

Figure 14B shows schematically examples of piston distance travelled along the axis of the cavitation chamber as a function of time; and

Figure 15 shows schematically examples of methods for performing cavitation in a plurality of liquid samples.

## DETAILED DESCRIPTION OF THE DRAWINGS

The following description of the drawings refer to example embodiments of the disclosed technology only. In the following description, various specific details are set forth in order to disclose various example embodiments of the invention. It will be apparent, however, to anyone skilled in the field of the invention that disclosed technology may be practiced without some or all of some of the specific structural or process details recited below in some embodiments of the invention. In some or all of the detailed examples of the disclosed technology, if the presence of features and process steps would be apparent to someone skilled in the field of the invention, such features and/or process steps may not be described in detail for the sake of clarity and conciseness. Reference numbers which refer to the same feature in different embodiments retain their numbering.

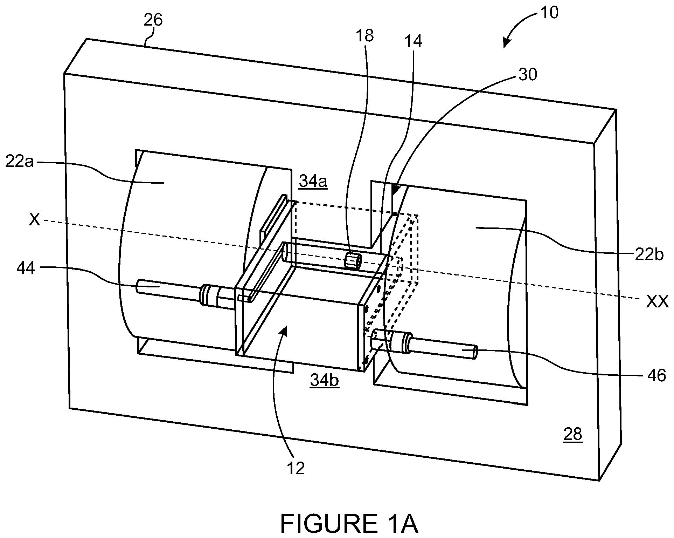

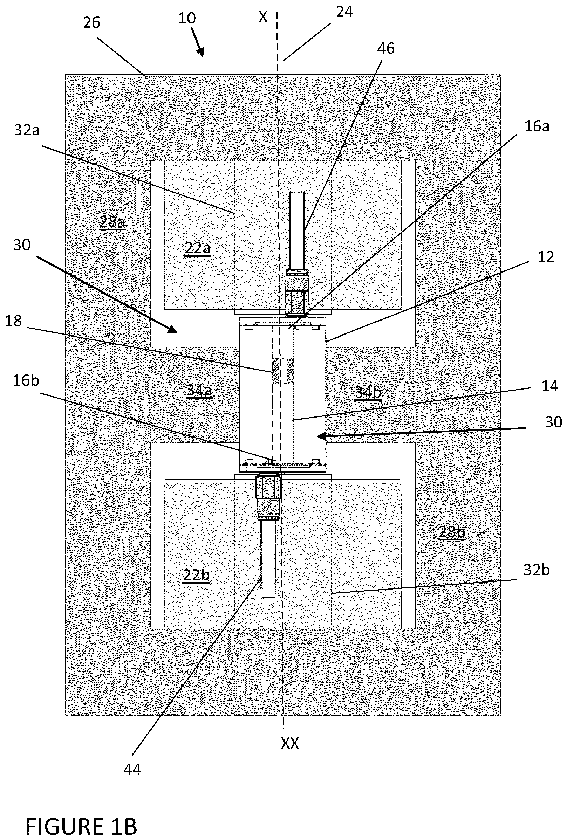

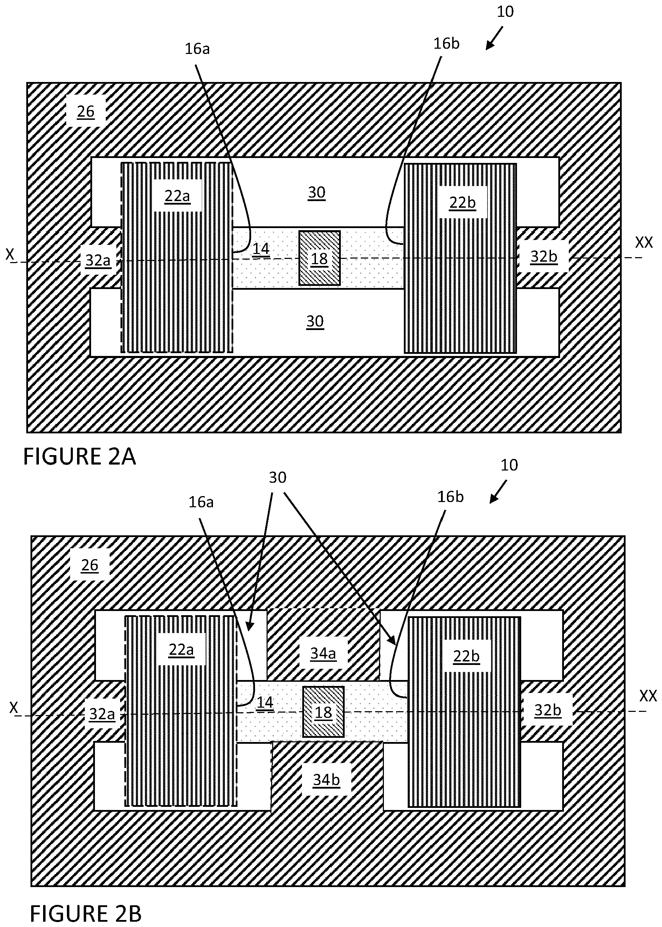

Figure 1A shows schematically three dimensional representations of an example embodiment of a cavitation system including a cavitation generator 10 according to the disclosed technology, for example, a cavitation generator 10 for inducing hydrodynamic cavitation in a liquid. In some example embodiments, the cavitation generator comprises: a housing 12 comprising a cavitation chamber 14 having a longest axis 24 and two ends 16a, 16b. The longest axis 24 is shown as X-X' in various figures in the accompanying drawings. The cavitation chamber includes a permanent magnet piston 18, which is not visible in Figure 1A but is visible in Figure 1B (and in other figures such as Figures 2A to 2B described in more detail later below).

In some embodiments, the cavitation system induces hydrodynamic cavitation in a liquid held in the cavitation chamber 14 using a cavitation generator 10 comprising a housing 12 for holding the cavitation chamber 14 when it is holding a permanent magnet piston 18 and liquid for cavitation using a piston 18. The cavitation generator 10 comprises in some embodiments, a bipolar pulse current controller 42 and at least two electromagnetic coils 22a, 22b arranged to accommodate between them the housing 12 including the cavitation chamber 14. At least one electromagnetic coil 22a is configured to generate an electromagnetic field at one end 16a of the cavitation chamber 14 when in the housing 12 and at least one electromagnetic coil 22b is configured to generate an electromagnetic field at the other end 16b of the cavitation chamber 14. The bipolar pulse current controller 42 is configured to generate bipolar current pulses, which alternate the polarity of the electromagnetic fields, generating electromagnetic force, wherein the electromagnetic force drives the piston 18 into linear motion bi-directionally between the one end 16a and the other, opposite, end 16b of the cavitation chamber 14 through the liquid held in the cavitation chamber 14 to induce cavitation of the liquid. The cavitation chamber 14 comprises in some embodiments a container holding the liquid, an inlet for introducing the liquid into the container, where the configuration of the inlet allows liquid to enter the container but not to escape via the inlet, and an outlet for removing liquid or gas from the container. The configuration of the outlet prevents liquid and gas, which have escaped from the container from returning. The piston 18 for inducing cavitation in the liquid in the cavitation chamber is a permanent magnet piston. The cavitation chamber (14) is configured with two end-walls, one end-wall being provided at the one end 16a of the chamber and the other end-wall being provided at the other, opposite, end 16b of the container. When the cavitation chamber is placed in the cavitation generator 10, the piston 18 is configured to cause cavitation in the liquid held in the cavitation chamber 14 by being driven by the electromagnetic fields of the cavitation generator 10, under the control of the bipolar pulse current controller, into linear movement between the end-walls 16a, 16b of the container. In some embodiments, one or more dampers may be provided before an end-wall of the container, in which case, the piston will move towards each one or both damped end-wall but may not impact it, or may impact it with less acceleration than if a damper is not provided. In some embodiments, the bipolar pulse current controller 42 generates a current having pulse waveform which is repeated in a pulse train whilst the cavitation generator 10 is operating. The pulse train allows for repeated linear movements of the piston back and forwards between the two ends of the cavitation chamber. The movement is along the direction of the longest length of the cavitation chamber, also referred to herein as a longest, for example a longitudinal axis of the cavitation chamber. This may be a horizontal direction or be positioned so as to allow for vertical movement of the piston to induce cavitation in some embodiments.

In some embodiments, the cavitation generator 10, which induces hydrodynamic cavitation in a liquid, has a removable housing 12 and/or cavitation chamber 14. In such embodiments, the cavitation generator 10 may comprise a bipolar pulse current controller 42 and at least two electromagnetic coils 22a, 22b arranged to accommodate between them a housing 12 for a cavitation chamber 14 including a permanent magnet piston 18. At least one electromagnetic coil 22a is configured to generate an electromagnetic field at one end 16a of the longest axis 24 of the cavitation chamber 14 of an accommodated housing 12 and at least one electromagnetic coil 22b is configured to generate an electromagnetic field at the other end 16b of the longest axis 24 of the cavitation chamber 14. The bipolar pulse current controller 42 is configured to alternate the polarity of the electromagnetic fields generated by the electromagnetic coils 22a, 22b to drive, when the cavitation generator 10 supports, using housing 12, a cavitation chamber 14, a piston 18 of the housed cavitation chamber into linear motion bi-directionally along the longest axis 24 between each end 16a, 16b of the housed cavitation chamber 14 such that the piston 18 moves through a liquid held in the housed cavitation chamber 14.

The piston 18 comprises a permanently magnetic material. The piston 18 is provided with at least one aperture 20 via which a liquid held within the cavitation chamber 14 passes through as the piston 18 moves in the direction along the longest axis X-X' of the cavitation chamber 14.

At least two electromagnetic coils 22a, 22b are provided, one at each end 16a, 16b of the housing 12. The electromagnetic coils 22a, 22b are configured to drive the piston 18 back and forwards, in other words in a bidirectional linear manner along the longest axis 24 of the cavitation chamber 14. As the piston 18 is driven along the cavitation chamber 14, liquid held in the cavitation chamber 14 is accelerated as a jet through the at least one aperture 20 in the piston 18. This jet of liquid, together with the rapid deceleration as the piston 18 collides with the end walls 16a, 16b of the cavitation chamber 14 which causes shockwaves within the liquid, results in hydrodynamic cavitation occurring in the liquid.

As shown in Figure 1A, the cavitation generator 10 comprises a ferromagnetic core 26 comprising of two yokes, side limbs 28, main limbs 32 (Fig 1B) and core aperture between main limbs 30. The housing 12 is provided within the core aperture 30. In some embodiments magnetic field concentrators 34a, 34b can be attached to the side limbs. Electromagnetic excitation coils 22a and 22b are wound around the main limbs.

The electromagnetic excitation coil support elements 32a, 32b are disposed on opposite inner sides of the peripheral region 28 of the core 26 and extend towards each other within the core hollow or aperture 30. In other words, the cavitation generator 10, the ferromagnetic core 26 includes at least two main limbs 32a, 32b where one main limb 32a is provided on an opposite side of the ferromagnetic core 26 to the other one 32b of the two main limbs 32a, 32b. In some embodiments, one of the electromagnetic coils 22a or 22b is wound about a main limb 32a or 32b, and the other one of the two electromagnetic coils 22a 22b is wound about the other one of the coil supporting elements 32a or 32b. The housing 12 is provided between the two main limbs 32a, 32b.

The longest axis X-X' of the cavitation chamber 14 within the housing 12 of the embodiments shown in the drawings is co-linear with the axis X-X' of the main limbs 32a, 32b about which the electromagnetic coils 22a, 22b are wound.

In some embodiments, one of the electromagnetic coils 22a or 22b is wound about a main limbs 32a or 32b, and the other one of the two electromagnetic coils 22a, 22b is wound about the other one of the limbs 32a or 32b. The limbs 32a, 32b extend towards each other to form the core aperture 30. The housing 12 is provided between the two main limbs 32a, 32b. The longest axis X-X' of the cavitation chamber 14 within the housing 12 is preferably co-linear with the axis X-X' of the main limbs 32a, 32b about which the electromagnetic coils 22a, 22b are wound.

In some embodiments, the bipolar pulse current controller 42 of the cavitation generator 10 controls current through the electromagnetic coils 22a, 22b to cause the electromagnetic field generated by the at least one electromagnetic coil 22a, 22b at one end 16a, 16b of the cavitation chamber 14 to repel the piston concurrently with the electromagnetic field at the other end 16a, 16b attracting the piston 18. The bipolar pulse current controller 42 also controls the current through the electromagnetic coils to cause the electromagnetic field generated by the at least one electromagnetic coil 22a, 22b at one end 16a, 16b of the cavitation chamber 14 to attract the piston 18 concurrently with the electromagnetic field at the other end 16a, 16b repelling the piston 18.

In some embodiments, the field reversal may be controllable by the bipolar pulse current controller 42 to cause the piston 18 to increase or decrease its acceleration as it moves between the ends 16a, 16b of the cavitation chamber 14.

In some embodiments, the bipolar pulse current controller 42 causes the electromagnetic fields of the electromagnetic coils 22a, 22b at both ends 16a, 16b of the cavitation chamber 14 to co-operate with each other to cause the piston to accelerate as it moves in each direction along axis 24 between the two ends 16a, 16b of the cavitation chamber 14 to a velocity where liquid passing the moving piston 18 generates a liquid jet within the cavitation chamber 14. In some embodiments, the acceleration of the piston is so high as it travels through the liquid from one end 16a, 16b of the cavitation chamber 14 to the other end 16a, 16b that deceleration of the accelerated piston 18 as it collides with the other end 16a, 16b of the cavitation chamber 14 generates a shockwave in the liquid within the cavitation chamber.

Main limbs 32a, 32b are not visible in Figure 1A as they are obscured by the excitation coil windings 22a, 22b, but they are visible in the wireline schematic drawing of Figure 1B. The magnetic field concentrator elements 34a, 34b are disposed on the other two opposing inner sides of the peripheral region 28 of the ferromagnetic core 26.

In some embodiments of the cavitation generator 10, the ferromagnetic core 26 further comprises at least two additional magnetic field concentrating elements 34a, 34b between which the housing 12 is provided and in some embodiments at least two electromagnetic coils are partially wound around the two main limbs 32a, 32a of the ferromagnetic core 26 and are also partially wound around each of the at least two additional magnetic field concentrating elements 34a, 34b.

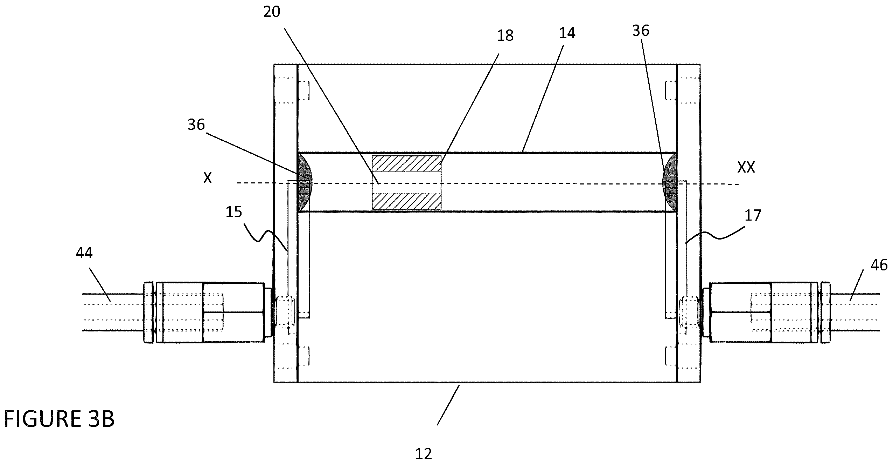

As shown in Figures 1A, and 1B, a housing 12 for a cavitation chamber 14 is provided at the centre of the ferromagnetic core 26, between the two electromagnetic coils 22a, 22b and between the two magnetic field concentrators 34a, 34b. Liquid is held in the cavitation chamber 14. In some embodiments, the cavitation chamber 14 is removed from the cavitation generator 10 for filing with new liquid samples. However, in some embodiments, the cavitation generator 10 further comprises a housing 12 including at least one cavitation chamber 14. As shown in Figures 1B and 3B, the cavitation chamber 12 is configured so that liquid is introduced into the cavitation chamber 14 using a liquid inlet 44 and removed from the cavitation chamber using liquid outlet 46.

The liquid inlet 44 also comprises an inlet connector and inlet check valve, which are not separately labelled in the drawings. The liquid outlet 46 also comprises an outlet connector and outlet check valve, which are not separately labelled in the drawings. Reference herein to inlet 44 and/or outlet 46 in any of the embodiments should be construed accordingly as including a reference to their respective connectors and/or check valves as well or instead if appropriate as would be apparent to anyone of ordinary skill in the art.

In some embodiments, the housing 12 is configured with a cavitation chamber 14, which is fillable with a liquid when accommodated between the electromagnetic coils 22a, 22b of the cavitation generator 14. Alternatively, in some embodiments, the housing 12 is configured with a cavitation chamber 14 which is filled with a liquid before being placed between the electromagnetic coils 22a, 22b of the cavitation generator.

Figure 1B shows an example embodiment of the cavitation generator 10 where elements already described in Figure 1A retain their numbering scheme, in which the cavitation generator 10 of Figure 1A is shown in a substantially vertical orientation as it could be used. In this example embodiment of Figure 1B, the liquid inlet 44 lies below the cavitation chamber 14 so that the cavitation chamber 14 is filled as liquid rises. There are many advantages to such a configuration as it facilitates degassing the sample prior to cavitation as any trapped gas in the cavitation chamber 14 can escape vertically via outlet valve 46.

In some embodiments, degassing is facilitated using check valves of the inlet 44, and outlet 46 on both the bottom and top sides of the cavitation chamber 14. Each check valve allows the liquid and/or gas to pass in one direction only and not to return. Each cavitation run of the cavitation generator 10 which involves pumping liquid from the bottom to the top of the cavitation chamber 14 automatically degasses the liquid sample to be cavitated by allowing escaping gas(ses) to leave the cavitation chamber via the top check valve of outlet 46.

In the embodiments shown in the accompanying figures, cavitation generator 10 also comprises a ferromagnetic core 26, wherein the ferromagnetic core 26 comprises two yokes, two side limbs 28a, 28b and two main limbs 32a, 32b. Each main limb supports at least one electromagnetic coil 22a, 22b in a manner which accommodates the housing 12 between the coils 22a, 22b. This allows axis 24 of the cavitation chamber 10 to be aligned with the axis of the magnetic fields produced by each coil 22a, 22b, which maximises the electromagnetic forces acting on the piston 18 along the axis 24.

In some embodiments of the cavitation generator 10, the ferromagnetic core 26 may further comprise at least two additional magnetic field concentrating elements 34a, 34b which are configured to concentrate the electromagnetic fields generated by the at least two electromagnetic coils 22a, 22b around the accommodated housing 12.

In some embodiments of the cavitation generator 10, for example, the embodiments shown in Figures 1A and 1B, the at least two electromagnetic coils 22a, 22b are configured to drive the piston 18 in a linear manner bi-directionally along the longest axis 24 of the cavitation chamber 14 between the ends 16a, 16b.

In some embodiments, the piston 18 is a permanent magnet. The piston 18 is not shown in Figure 1A for clarity however, it is shown in Figure 1B. As shown in Figure 1B, in some embodiments, the piston is driven in a bi-directional linear manner along the longest axis X-X' of the cavitation chamber 14 by the electromagnetic fields generated using the electromagnetic coils 22a, 22b provided at each end 16a, 16b of the cavitation chamber 14. The piston 18 has an aperture 20 and the motion of the piston 18 within the cavitation chamber 14 causes any liquid within the cavitation chamber to be forced through the piston 18 at speed so as to emerge as a jet on the far side of the piston 18.

In some embodiments, as the piston 18 is driven along the cavitation chamber 14, the liquid held in the cavitation chamber 14 is accelerated as a jet through the at least one aperture 20 in the piston 18 and propagates away from the piston 18 along the cavitation chamber 14. In addition, the deceleration of the piston 18 upon collision with an end 16a, 16b of the cavitation chamber 14 results in water hammer effect, which generates shockwaves, which propagate within the liquid held in the cavitation chamber 14 away from that end 16a, 16b of the cavitation chamber 14.

In some embodiments of the cavitation generator 10, a damper 36 is provided at least at one end but preferably at both ends 16a, 16b of the cavitation chamber 14. The damper(s) 36 increase the pressure drop in the liquid within the cavitation chamber 14 upon collision of the piston 18 with the damper 36.

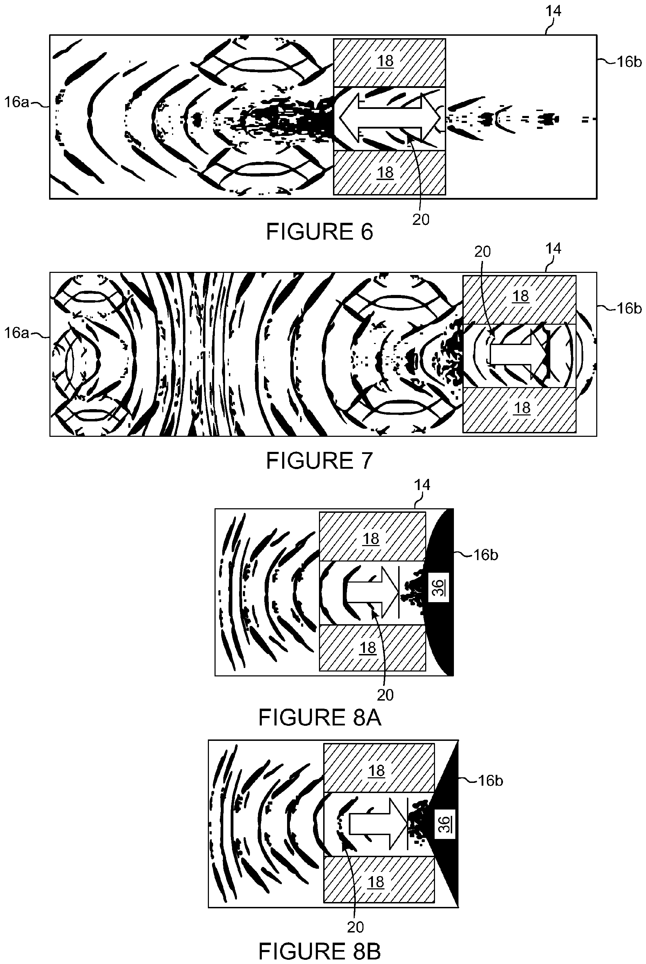

The combination of producing a jet of liquid which is emitted from the internal aperture 20 of the piston 18 and the motion of the piston accelerating and decelerating as it collides with each end 16a, 16b of the cavitation chamber 14 which causes shockwaves within the liquid cause cavitation to occur within the liquid held within the cavitation chamber 14. Figures 6, 7, and 8A and 8B described in more detail later below illustrate schematically the formation of jets and shockwaves in some example embodiments of the cavitation chamber 14.

The cavitation which occurs within the liquid held by the cavitation chamber 14 may be used for a number of purposes, for example, in some example embodiments the liquid may be homogenized by the cavitation and consequent mechanical effects such as high shear stress which are induced by the piston movement. Once the cavitation process has been completed, for example, once the liquid held in the cavitation chamber 14 has been sufficiently homogenized, it may be removed from the cavitation chamber via liquid outlet 46.

Those of ordinary skill in the art would appreciate that the particular configuration of liquid inlets and outlets shown in Figures 1A and 1B is merely by way of example and different configurations may be used in different embodiments. In embodiments where the cavitation chamber 14 receives liquid via an inlet 44 and from which liquid is removed via outlet 46 the inlets and outlets may need to be removed so as to be cleaned and/or otherwise reduce the risk of one liquid sample in the cavitation chamber 14 being contaminated with residues from one or more previous liquid samples held within the cavitation chamber 14.

In some embodiments, the cavitation chamber 14 is filled by removing one end 16a, or 16b from the cavitation chamber so that it forms a hollow tube which can then be filled with the liquid sample. Next the piston 18 is inserted and then the cavitation chamber is sealed by replacing the end before putting the cavitation chamber 14 back in housing 12 and positioning the housing 12 between the excitation coil elements 22a, 22b in some alternative embodiments.

Advantageously, this reduces the number of parts of the cavitation generator that need to be cleaned as it will only be the cavitation chamber itself and the interior piston that will require cleaning between samples. It is also possible to substitute one sealed cavitation chamber with a different cavitation chamber of the same or similar dimensions, which allows samples to be prepared off-line before being exposed to the magnetic field and homogenized. This allows for more efficient use of the cavitation generator 10 as there is no need to wait until cavitation chamber 14 is cleaned before it can be used again, as a clean cavitation chamber 14 can be inserted right away.

As mentioned above, Figure 1B is a simplified wireline diagram of the cavitation generator 10 shown in Figure 1A where elements like those shown in Figure 1A retain their numbering scheme in Figure 1B. As shown in Figure 1B the cavitation chamber housing 12 is positioned between the two main limbs 32a, 32b which are made visible in the wire drawing of Figure 1B although in practice they would be mostly concealed by the electromagnetic excitation coils 22a, 22b which are wound about them to generate the magnetic fields which drive the piston 18 into motion within the cavitation chamber 14.

As shown in Figure 1B the central axis X-X' of the cavitation chamber 14 within cavitation chamber housing 12 is co-linear with the axis X-X' of the main limbs 32a, 32 about which the electromagnetic coils 22a, 22b are wound. Axis X-X' within the cavitation chamber 14, which is typically a cylindrical cavity within the housing 12 of uniform cross-section, also defines the path along which piston 18 will be driven into linear motion.

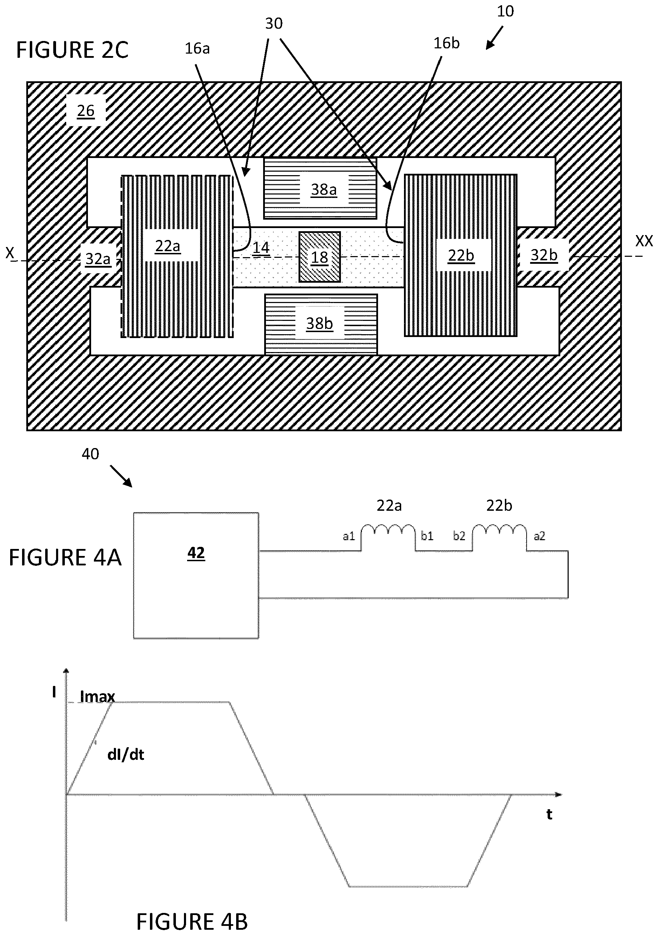

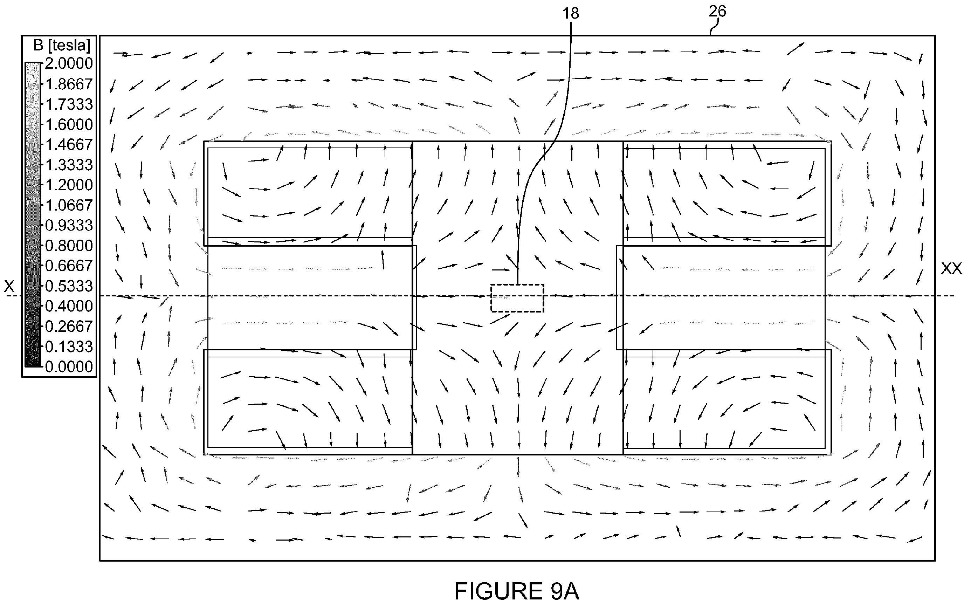

Figures 2A, 2B, and 2C show schematically two-dimensional, 2D, representations of example embodiments of a cavitation generator 10 according to the disclosed technology, which illustrate the different configurations of the cavitation generator 10. The magnetic fields which result from the different configurations shown in Figures 2A, 2B, and 2C are shown later in Figures 9A, 9B, 10A, 10B, and 11A and 11B respectively.

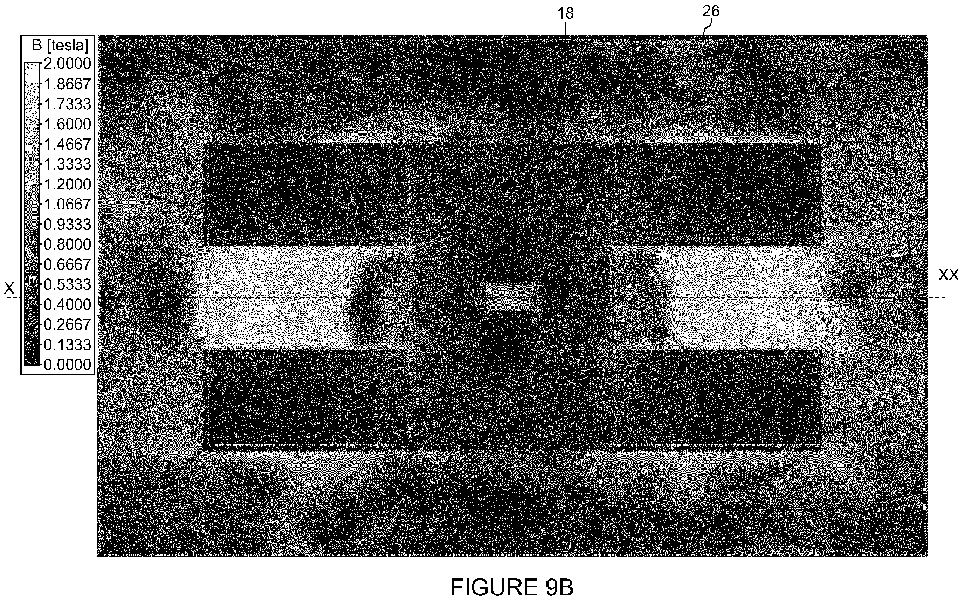

Turning first to Figure 2A, this shows a 2D representation of a ferromagnetic core of an example cavitation generator 10 without any magnetic field concentrators 34a, 34b. In other words it is a different embodiment from the embodiment of the cavitation generator shown in Figures 1A and 1B. The axially symmetrical structure of the ferromagnetic core 26 of the cavitation generator 10 provides a force on the piston 18 in a predominantly longitudinal direction, for example, as is illustrated in Figures 9A and 9B.

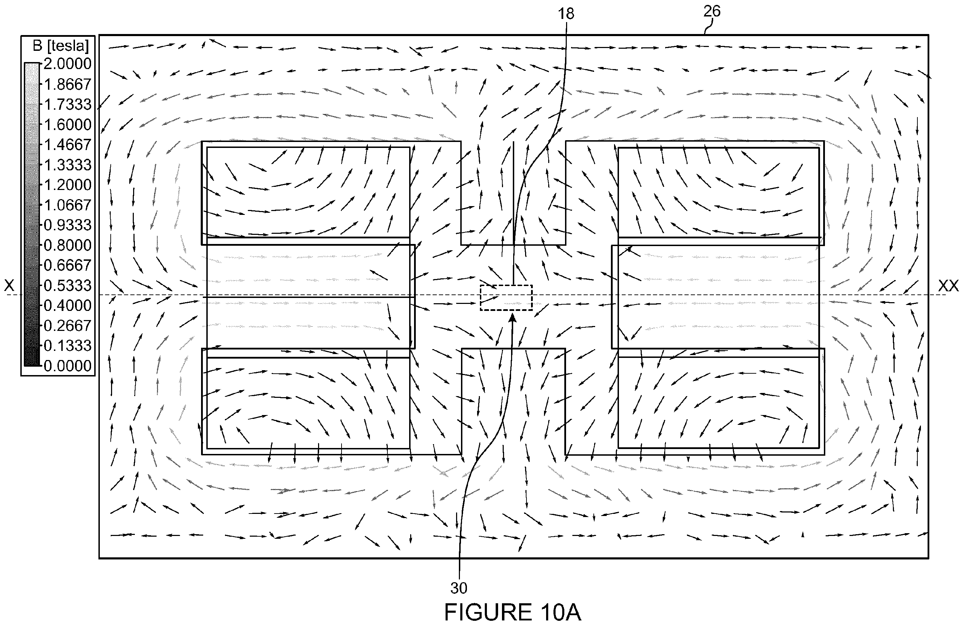

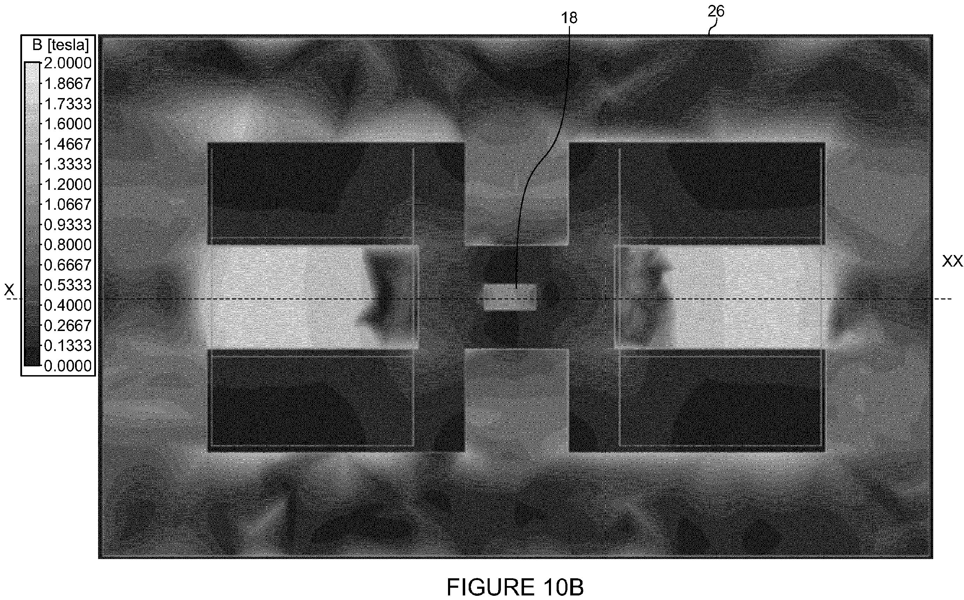

In Figure 2B, a 2D representation of an example cavitation generator is illustrated in which two magnetic field concentrators 34a and 34b concentrate the magnetic field along the middle portion of the cavitation chamber 14. Adding ferromagnetic field concentrator elements 34a, 34b to the ferromagnetic core 26 in some embodiments of the cavitation generator 10 results in a more homogeneous concentration of the magnetic field along the cavitation chamber 14 than the concentration of the magnetic field provided when only the ferromagnetic core and excitation coils 22a, 22b provided as shown in Figure 2A for example. The additional ferromagnetic field concentrator elements 34a, 34b also reduce the magnetic field leakage from the cavitation chamber 14. The effect of the two magnetic field concentrators is also shown in Figures 10A, 10B.

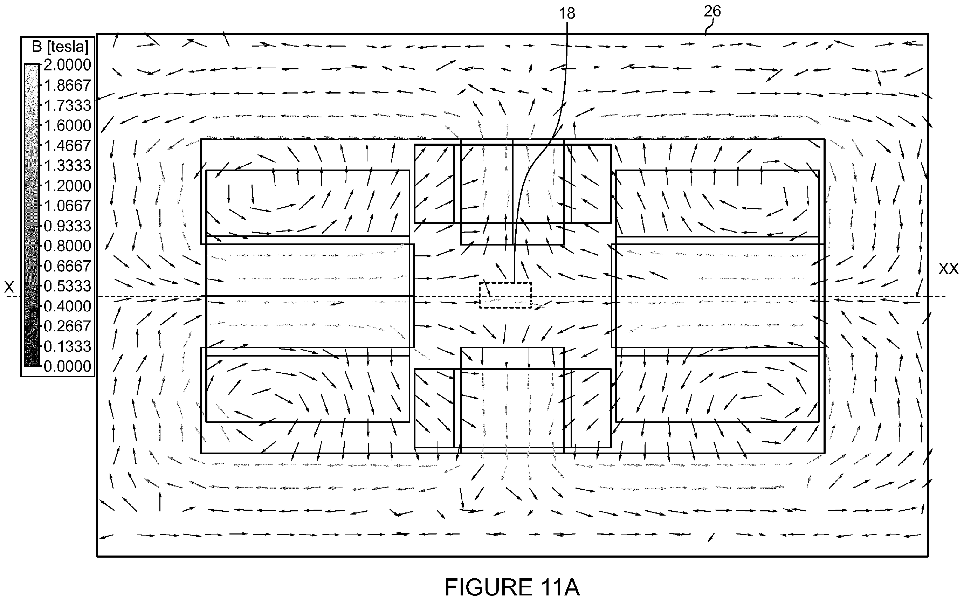

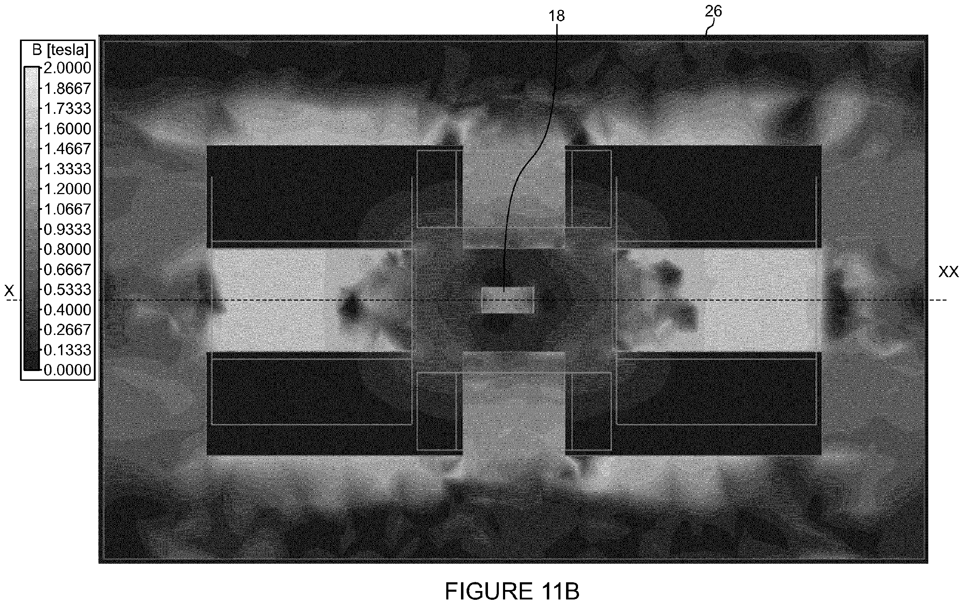

In Figure 2C, a 2D representation of an example cavitation generator is illustrated in which, in addition to having excitation coils 22a, 22b wound around the main limbs 32a, 32b of the ferromagnetic core 26, additional coil windings 38 (shown as additional coil windings 38a, 38b) are provided around the field concentrator elements 34a, 34b to further increase the magnetic field along the length of cavitation chamber 10. The divisional of each excitation coil winding into two parts, where the coils with a smaller number of turns are installed on the field concentrators, further increases electromagnetic force which acts on the piston 18 within the cavitation chamber 14. More details of the effect of the secondary coil windings on the electromagnetic forces exerted on the piston 18 within the cavitation chamber 14 are shown in Figures 11A, 11B disclosed below.

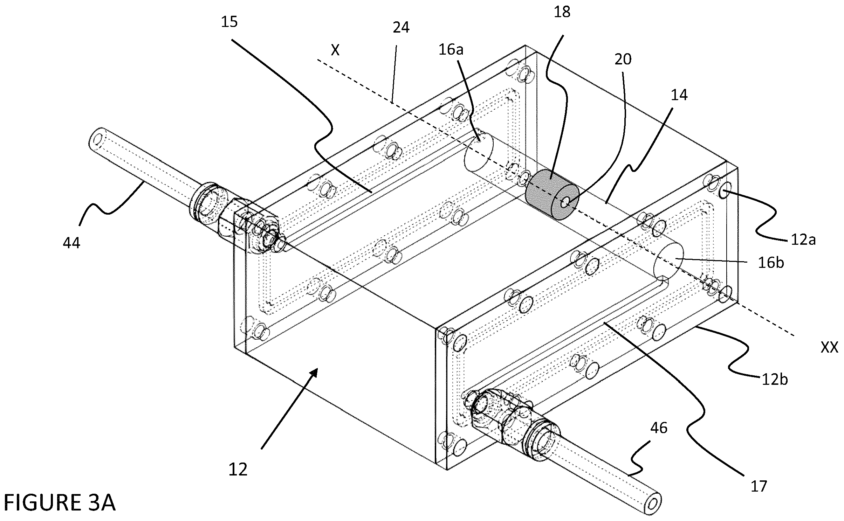

Figure 3A shows schematically an enlarged three-dimensional view of an example housing 12 for a cavitation chamber 14 which contains a permanent magnet piston 18. The housing 12 comprises front and rear covers, of which front cover 12b is shown connected via fixing means, for example, a screw 12a, to the housing body. Figure 3B shows the same example housing in a two-dimensional view. The cavitation chamber 14 illustrated in Figures 3A and 3B is configured for generating hydrodynamic cavitation in a liquid held within the cavitation chamber 14 which is introduced via liquid inlet 44 and which is discharged via liquid outlet 46 according to the disclosed technology. The liquid inlet 44 also comprises an inlet connector and inlet check valve which are not separately labelled in the drawings. The liquid outlet 46 also comprises an outlet connector and outlet check valve which are not separately labelled in the drawings. Reference to any of inlet 44 and/or outlet 46 should be construed as referring to their respective connectors and/or check valves as appropriate as would be apparent to anyone of ordinary skill in the art.

In Figures 3A and 3B, the cavitation chamber 14 comprises a cylindrical chamber of uniform cross-section and at each end wall 16a, 16b of the cavitation chamber is a damper 36 which shrinks when the piston 18 hits it and due to the sudden increased volume in the chamber there is a resulting short-term pressure drop which generates pronounced cavitation within the liquid sample in the cavitation chamber 14.

Also shown in Figures 3A and 3B are the inlet connector of the inlet 44 and outlet connector of the outlet 46 which allow liquid samples to be introduced into the cavitation chamber 14 in some embodiments without needing to remove the cavitation chamber 14 from the housing 12 or from the cavitation generator 10. In some embodiments, in which the cavitation chamber is fixed within the housing 12 within the cavitation generator 10, in order to change over a liquid sample in the cavitation chamber, the cavitation liquid is drained from the chamber, for example, via outlet 46. The liquid may be pumped out via outlet 46 or, if the cavitation generator can be inverted, so that liquid drains under gravity from the outlet 46 of the cavitation chamber 14. In this case, the cavitation generator may be inverted again so that when filling the chamber 14 the chamber outlet 46 is above the chamber inlet 44 so as to allow better degassing of the liquid sample when filling the chamber.

However, in some embodiments of the cavitation generator 10, the cavitation chamber 14 is removable from the cavitation generator 10. For example, a cavitation chamber 14 may be provided for use with a cavitation generator according to the first aspect or any other disclosed embodiments of a cavitation generator, where the cavitation chamber 14 comprises a container for a liquid having two end-walls 16a, 16b, each end-wall provided at one end of the longest axis (24) of the liquid container, an inlet 44 for introducing the liquid into the cavitation chamber 14, and an outlet 46 for removing liquid from the container. The outlet 46 is configured to allow liquid and gas to escape from the cavitation chamber 14 but not to return. The inlet 44 is configured to allow liquid to enter the container but not to escape.

The cavitation chamber 14 shown in the Figures contains a permanent magnet piston, which is used to cause cavitation in liquid samples contained within the cavitation chamber 14. The piston 18 is configured to cause cavitation in a liquid held in the cavitation chamber 14 when it is driven rapidly back and forth between the ends of the cavitation chamber by electromagnetic fields, which are generated by the coils 22a, 22b of a cavitation generator 10 according to the first aspect and/or any one of the disclosed embodiments of the cavitation generator 10.

Current flowing through coils 22a, 22b which generates the electromagnetic fields is controlled by a bipolar pulse current controller 42 of the cavitation generator 10 so as to generate magnetic fields which repeatedly drive the piston 18 into repeated back and forwards rapid linear movement between the ends 16a, 16b of the cavitation chamber along the longest axis 24.

In some embodiments, the piston 18 has at least one aperture 20 via which liquid held within the cavitation chamber 14 passes through and emerges as a liquid jet as the piston 18 is driven by the electromagnetic coils to move along the longest axis of the cavitation chamber 14.

In some embodiments, liquid held within the cavitation chamber 14 passes through a gap between the piston 18 and an internal surface of the cavitation chamber and emerges as a liquid jet as the piston 18 is driven by the electromagnetic coils to move along the longest axis of the cavitation chamber 14.

In some embodiments, the outer surface of the piston 18 is configured with grooves forming channels for the liquid to pass through between the piston 18 and the internal surface of the cavitation chamber 14.

In some embodiments, as mentioned above, the cavitation chamber 14 is configured to be filled with a liquid before being placed in the cavitation generator 10.

In some embodiments, a damper 36 is provided adjacent to each end 16a, 16b of the cavitation chamber 14. Using a damper increases the pressure fluctuation in the liquid in the cavitation chamber 14 upon collision of the piston 18 with the damper 36. The action of the dampers on the piston intensifies and boosts the pressure fluctuation which causes a water hammer effect.

In some embodiments, the cavitation chamber 14 is configured to induce cavitation in a small sample of liquid in a cavitation chamber according to the first aspect or any other embodiment disclosed herein, for example, the cavitation chamber 14 may have one of the following configurations: a diameter of 10 mm with a volume of more than 4 ml and less than 5 ml, for example, 4.7 ml, or a diameter of 15 mm with a volume of more than 10 ml and less than 11 ml, for example, 10.6 ml, or a diameter of 20 mm with a volume of more than 18 ml and less than 19 ml, for example 18.9 ml. The actual volumes of liquid in each cavitation chamber will be less than those stated as the piston will take up some of the available volume within the cavitation chamber. In this way, a laboratory based cavitation generator, which is capable of analysing liquid samples smaller than 5 ml up to at least 15 ml, and possibly, in some embodiments, up to 100 ml may be provided. These dimensions are selected as they allow small samples of liquids to be cavitated. In some embodiments, the same cavitation generator 10 may be configured to accommodate different sizes of cavitation chambers interchangeably.

In some embodiments, a velocity of the piston 18 is controlled by adjusting the electromagnetic field of the electromagnetic coils 22a, 22b around the cavitation chamber 14 using a bipolar pulse current controller 42 of a cavitation generator 10 according to the first aspect or any of the disclosed embodiments. In some embodiments, the rate of change of the velocity, in other words, the acceleration of the liquid jet is controlled via the bipolar pulse current controller adjusting the electromagnetic fields so as to further enhance the generation of shockwaves to improve the cavitation of the liquid.

As mentioned above, in some embodiments of the cavitation chamber 14, the sealed working volume of the cavitation chamber 14 itself is typically in the range of few ml (from around 5 ml to around 100 ml or so) which allows the cavitation generator 10 to be used in a laboratory environment where it may be used for applications requiring small treatment volumes such as, for example, for biohazardous applications such as handling viruses, bacteria. The actual available volume for liquids to be contained within the cavitation chamber however will be less than the volume of the cavitation chamber itself due to the piston 18 taking up volume. If the piston is hollow, less volume is taken up, but the cross-sectional area of the piston must still be sufficiently large enough to cause cavitation in the liquid as it is moved back and forwards along the cavitation chamber.

As illustrated in Figures 1A, 1B and Figures 3A and 3B, the cavitation generator may also operate as a pump (see inlets/outlets 44/46) and is capable of self-priming. As shown in the embodiment shown in Figure 3A, the outer side of each end wall 16a, 16b of the cavitation chamber 14 is configured with an opening via which liquid held within the chamber 14 can access an inlet channel 15 and outlet channel 17 via which liquid is delivered into the chamber 14 from check valve pump inlet 44 and via which liquid is discharged via check-valve pump outlet 46. This allows the cavitation chamber to have liquid flow in one direction only through the pump, so that a continuous series of liquid samples can be cavitated in some embodiments. However, in some embodiments where liquid samples to be cavitated between different cavitation sessions, the cavitation chamber 14 may need to be cleaned between sessions so that one sample does not contaminate another sample. In such embodiments, it may be advantageous to provide a removable cavitation chamber and/or housing, for example, so that access can be facilitated to clean the cavitation chamber interior directly when it is removed from the cavitation generator 10 rather than having to flush a cleaning solution through the cavitation chamber 14 in situ within the cavitation generator 10. Access to a chamber interior for cleaning, or, for example, to change the piston or piston size, may be provided in some embodiments, via removable ends 16a, 16b. For example in some embodiments, bolts or caps with grooves may be provided in the outer ends 16a, 16b of the cavitation chamber which can be turned to allow a user to remove and replace one or both ends of the cavitation chamber so as to access the interior and be able to reseal it. Embodiments with removable cavitation chambers 14 with removable ends 16a, 16b facilitate cleaning and also placing a new liquid sample in the cavitation chamber in some embodiments, in which case, the valves shown in Figure 1a, 1B, 3A and 3B may not be required as the chamber can be filled prior to being placed in the cavitation generator 10.

As mentioned above, the dimensions of the cavitation chamber 14 in some embodiments of the cavitation generator 10 described above are small enough for laboratory testing of very small liquid samples, for example, between 5 ml up to 100 ml. The cavitation chambers and pistons can be scaled down to suit any sample size. It may be possible in some embodiments, to cavitate a number of batches with more than one cavitation chamber housed within a coil arrangement providing the magnetic field configuration can be adjusted to drive the pistons in each cavitation chamber in a sufficiently longitudinal direction so as to achieve sufficient acceleration and deceleration to induce the desired degree of cavitation.

Also as mentioned above, typically lab-based liquid samples will be less than 100 ml in volume. The samples of liquid, which may be cavitated, have a relatively small volume, for example, a liquid volume less than 20 ml, less than 15 ml, less than 10 ml, or less than 5 ml is possible, which allows cavitation for example of medical samples such as are commonly used for medical testing, and where similar relatively low volumes of test fluids may only be available, in some embodiments.

Advantageously, by providing a device for generating hydrodynamic cavitation with shockwaves, which allows treatment of low volume liquid samples even small amounts of liquid can be homogenized or used for another application such as one of the applications mentioned above.

Thus one aspect of the disclosed technology provides a device for homogenization of liquids which comprises a cavitation generator 10 according to any of the disclosed embodiments, comprising a cavitation chamber 14 which holds a liquid which is homogenized using the cavitation generator 10, for example, a cavitation generator 10 which comprises a housing 12 including a cylindrical cavity which functions as the cavitation chamber 14, a permanent magnet piston 18, in which an aperture 20 allows for the passage of fluid through the piston 18 when it is within the cavitation chamber 14; and at least one electromagnetic coil 22a, 22b which is configured to drive the piston 18 into motion along the longest axis of the cylindrical cavitation chamber 14. The piston 18 is enclosed within a cavitation housing 12 having a cylindrical cavity which forms a cavitation chamber 14. The piston 18 is driven by an externally applied magnetic field generated by the specially designed electromagnetic coils 22a, 22b. In some embodiments, the piston, by which term is meant a permanent magnet piston comprises or consists of one or more permanent magnets or materials comprising or consisting of permanent magnets. In some embodiments, the cavitation chamber 14 includes more than one permanent magnet pistons, and may include suitable spacers between each permanent magnet piston. References herein to a or the permanent magnet piston should accordingly be considered to include in some embodiments a reference to a piston comprising one or more permanent magnets or to more than one piston comprising one or more permanent magnetics unless the context implies to the contrary. The term permanent magnet refers to a magnet that retains its magnetic properties in the absence of an inducing field or current.

Figure 4A shows schematically the circuit diagram of the electromagnetic coil excitation control circuitry 40 or power electronics for controlling the generation of the magnetic field in the excitation electromagnetic coils 22a, 22b (and in embodiments where they are provided in the secondary windings 38a, 38b) of the cavitation generator 10 according to the disclosed technology.

As shown in Figure 4A, a bipolar pulse current controller 42 is connected to two excitation coils 22a, 22b. The coils 22a, 22b are connected on a circuit so as to produce electromagnetic fields in opposite directions, with one coil attracting the piston 18 at the same time as another coil repels the piston 18. The bipolar pulse current controller 42 is configured to control the amount of current each coil receives so that sufficient electromagnetic force is exerted on the piston 18 to induce rapid acceleration of the piston 18 within cavitation chamber 14. In other words, acceleration of the piston 18 along the axis X-X' of the cavitation chamber 14 from the end where one of coils 22a, 22b is repelling it along X-X' towards the other end 16a, 16b where the electromagnetic field generated by the coil 22a, 22b at that end attracts it. The piston 18 then rapidly decelerates as it collides with an end wall 16a, 16b (or with a damper adjacent to an end wall 16a, 16b in some embodiments where the cavitation chamber 14 is provided with dampers at each end wall 16a, 16b).

In some embodiments of the cavitation generator 10, in order to obtain sufficient electromagnetic force in the cavitation chamber 14, the excitation coils 22a, 22b are electrically connected in series in Figure 4A, however in some alternative embodiments they may be connected in parallel. In either case, coils 22a and 22b need to be connected in such a manner that they produce electromagnetic fields in an opposite direction. Thus one coil attracts the permanent magnet piston while the other repels it.

The velocity or acceleration of the piston 18 and consequently, of the jet of liquid through the at least one aperture 20 of the piston 18, is accordingly controllable in some embodiments by adjusting the electromagnetic field of the electromagnetic coils 22a, 22b around the cavitation chamber 14 using the bipolar pulse current controller 42 of the electromagnetic coil excitation control circuitry 40.

Figure 4B shows the resulting time curve of the current generated by the power electronics circuitry shown in Figure 4, in which the current flowing in a first direction within the electromagnetic coils 22a, 22b peaks at Imax and is maintained for a period of time before rapidly decreasing and then remains at zero for a short period of time before reversing in direction. Typical peak current Imax values are 150 A to 200 A which results typically in a non-uniform magnetic field of 1.5 T to 1.8 Tesla within the core 26 around the cavitation chamber 14 (see also Figures 9A, 9B, 10A, 10B, and 11A, and 11B). The waveform shown in Figure 4B is an example of a bipolar pulse waveform and it will be apparent to anyone of ordinary skill in the art that the pulse waveform will be repeated in a pulse train whilst the cavitation generator 10 is operating.

The reversing, in other words, alternating, electromagnetic fields generated by the excitation coils 22a, 22b cause the piston 18 to move back and forwards along the cylindrical cavitation chamber 18 in a pulsating manner which is characterized by rapid acceleration and deceleration.

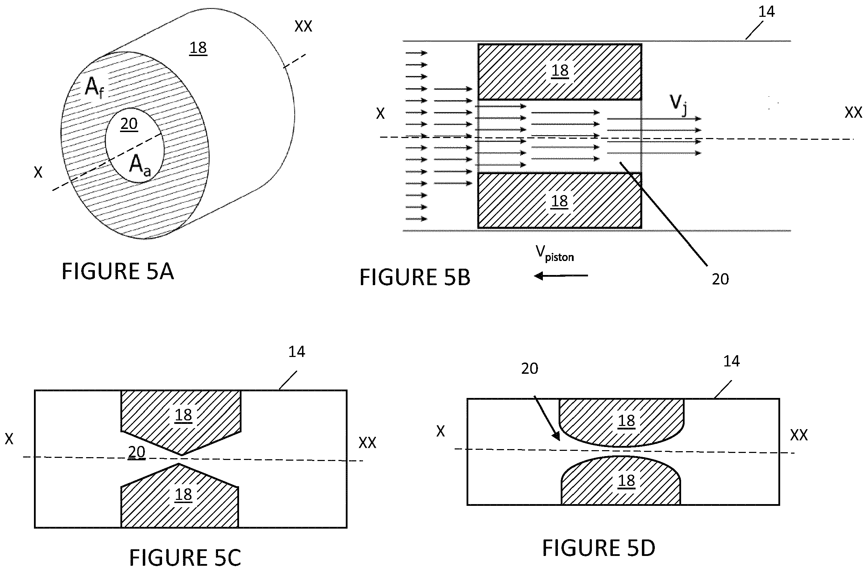

Figure 5A shows an example shape of the hollow piston 18, which allows for a jet of liquid to pass through the piston as it moves. The jet of liquid and the rapid acceleration and deceleration of the piston 18 between the ends 16a, 16b of the cavitation chamber 14 both contribute to the occurrence of cavitation and shockwaves within the liquid held within the cavitation chamber 14.

As shown in Figure 5A, the face of the piston 18 has a cross-sectional area, $A_f$, and the aperture 20 within the piston 18 has a cross-sectional aperture area, $A_a$. The size of the piston and aperture act in two ways. Firstly, the piston size affects the magnetic force exerted on the piston. The larger the piston, the larger the magnetic force. Secondly, the drag force counteracting the piston movement is dependent on the ratio of aperture area $A_a$ and piston front face area $A_f$. The greater this ratio is, the less the drag force on the piston, meaning the faster the piston 18 will move between each end 16a, 16b of the cavitation chamber 14. The piston velocity defines the exiting liquid jet velocity which can be approximately represented by equation (1) below:

Equation (1)

$$v_j = v_m \cdot \frac{A_f}{A_a}$$

Figure 5B shows schematically how the magnitude of velocity (represented by the length of the arrows) of the liquid flow within the cavitation chamber change relative to the piston as the piston 18 moves. The piston velocity $V_{piston}$ is showing the piston moving from right to left, whereas the liquid is caused to flow through the piston as pressure builds up in front of the piston. As the liquid flows through the aperture 20 of the piston, its velocity increases and the liquid emerges as a jet with velocity $V_j$ from the rear of the piston.

The high jet velocity is the reason for cavitation occurrence, due to the pressure drop in the aperture 20 below the vaporization pressure. Whilst shockwaves are known to occur due to cavitation cloud collapses, in this case a shockwave occurs due to the speed at which the piston 18 hits the end walls 16a, 16b of the cavitation chamber 14. As the piston speed can be controlled using the electromagnetic forces exerted on the piston by the electromagnetic coils 22a, 22b, and in some embodiments, additionally from the secondary electromagnetic coils 38a, 38b wound around the field concentrators 34a, 34b, by varying the amount of current through the coils 22a, 22b, 38a, 38b, the degree of cavitation that is caused within the cavitation chamber 14 may also be controlled.

As shown in Figures 5A and 5B, the piston 18 has a cylindrical shape having a uniform external cross-section and a central aperture also having a uniform internal cross-section.

In some embodiments, the volume of the cavitation chamber 14 is configured for use in laboratory testing of a fluid sample of up to 100 ml in size. In some embodiments, the volume of the cavitation chamber is configured to allow cavitation to be induced in a sample volume of liquid, which is more than approximately 5 ml but less than approximately 15 ml. In some embodiments, the volume of the cavitation chamber is configured to allow cavitation to be induced in a sample volume of liquid which is more than approximately 5 ml but less than approximately 10 ml. In some embodiments, the volume of the cavitation chamber is configured to allow cavitation to be induced in a sample volume of liquid which is more than approximately 5 ml but less than approximately 8 ml.

In some embodiments, the or each piston 18 has a length with a value in the range from 5 mm to 20 mm. In some embodiments, each or the permanent magnet piston 18 within the cavitation chamber 14 is assembled from at least one permanent magnet, and in some embodiments where there is more than one piston may include one or more spacers between pistons. The external diameter of each of the one or more pistons in the cavitation chamber may be the same or different.

In some embodiments, the (or each if more than one) piston has an external diameter with a value or values within a range from 10 mm to 20mm, for example, 15 mm. The widest part of the piston closely conforms to the inner diameter of the cavitation chamber 14. In other words, there may only be less than a couple of mm of a gap between the piston and the cavitation chamber in some embodiments. In some embodiments, the piston is hollow so that liquid is forced through an aperture 20 in the piston 18.

In some embodiments, when the cavitation chamber comprises more than one piston or has one piston formed from multiple magnets, two or more or all of the pistons or magnets within the cavitation chamber may have the same outer and inner diameters or dimensions as each other. They may however have different configurations in some embodiments, for example, they may have grooves on their outer surface and/or one or more inner apertures or holes along their lengths via which liquid is able to pass from one end of the piston to the other. In some embodiments, one or more of the pistons may have slightly different dimensions to each other. In some embodiments, the inner diameter, in other words the diameter of the internal aperture or inner bore of a hollow piston is uniform cross-section along the length of the piston (see Figure 5B for example). Here the length of the piston is defined as the length aligned with the direction of movement of the piston along the cavitation chamber. In some embodiments, however, the diameter of the internal aperture of each or at least one piston is non-uniform along the length of the cylindrical piston aperture 20. The diameter may have a value that is variable or fixed at a value between 4 mm to 6 mm. In some embodiments, a cylindrical permanent magnet piston 18 was used with an external diameter of 15 mm and an internal aperture 20 having a non-uniform cross-sectional diameter with values ranging between 4 mm and 6 mm (see the examples shown in Figure 5C and 5D). The velocity of the jet is a function of the factor of the face to aperture area ratio of the piston and is preferably greater than the piston velocity. For example, the jet velocity is 6.25 m/s in the case where the piston face to piston aperture cross-sectional area ratio is 10/4 or equivalently 15/6 and the jet velocity is preferably 25 m/s in the case where the ratio of the area of a piston face to the piston aperture cross-sectional area is 20/4. These are merely given by way of example, and it will be apparent to anyone of ordinary skill in the art that a range of different configurations and sizes may be used for the volumes of the cavitation chamber 12 and permanent magnet pistons 18.

In some embodiments, the internal aperture 20 has a Venturi shape, in other words, the diameter of the aperture along the length of the piston is non-uniform. This was found to result in a higher cavitation generation efficiency. Figures 5D and 5C each show different examples of different internal configurations of the piston aperture 20 where the Venturi effect on the liquid expelled through the piston aperture 20 is enhanced by providing a pinch point within the piston aperture (in other words $A_a$ is not uniform and $A_a$ is a minimum within the body of the piston 18). Determining the optimum smallest possible aperture diameter is challenging. The biggest influence restricting piston acceleration comes from the hydrodynamic drag which is affected by the piston/aperture cross section ratio, velocity of the piston and viscosity of the liquid. If the aperture diameter is too small, the piston won't move. In some embodiments, piston 18 has an empirically measured smallest possible aperture so the exiting jet is measured as having the highest velocity and which causes the smallest amount of drag so that the piston 18 moves as rapidly as possible, which also causes a high velocity exiting jet.

Cavitation within the liquid within the cavitation chamber 14 occurs as follows. Firstly, rapid acceleration of the piston 18 in the cavitation chamber 14 leads to formation of a vapour cloud in a low-pressure region of the liquid behind the piston 18. Secondly, a vapour jet is formed due to the reduction of the cross-sectional area of the liquid flow within the aperture 20 through the piston 18 within the cavitation chamber 14. This increases the velocity of the liquid as it moves through the piston 18 and causes a sudden pressure drop in the cavitation chamber 14. Finally, shockwaves are generated by a water hammer mechanism due to the rapid deceleration of the piston when it hits the end point of the cylindrical cavity.

Figure 6 shows schematically a first example representation of the mechanism of generation of cavitation jets and shock waves in the hydrodynamic cavitation generator according to an example embodiment of the disclosed technology. As shown in Figure 6, when the piston 18 is caused to move linearly back and forwards along axis X-X', jets of liquid are forced through the piston aperture 20 and this with the rapid acceleration and deceleration of the piston 18 hitting end walls 16a, 16b produces shockwaves which cause cavitation within the liquid held in the cavitation chamber. Figure 7 shows schematically a second example representation of the mechanism of generation of cavitation jets and shockwaves in the hydrodynamic cavitation generator, which shows more clearly how the shockwaves propagate within the cavitation chamber 14 as the piston 18 is caused to move towards the right-hand side wall 16b.

In some embodiments, for example those shown in Figures 8A and 8B or in the example cavitation chamber housing 12 shown in Figure 3, the pressure build up when the piston collides with an end wall 16a, 16b of the cavitation chamber 14 is further increased by providing a damper 36 made of soft material. Whilst cavitation may occur by having a damper 36 provided just at one end, 16a or 16b, of the cavitation chamber 14 this may not produce sufficient cavitation and so preferably, dampers 36 are provided at both ends 16a, 16b of the cavitation chamber in some embodiments of the disclosed technology. When the piston 18 hits the damper 36, the damper reduces in volume, and the volume within cavitation chamber occupied by the fluid correspondingly increases and the pressure in the cavitation chamber accordingly drops.

Two examples of cavitation chambers 14 with cone-shaped damper shapes are illustrated in Figures 8A and 8B. In Figure 8A, the cone has curved sides in cross-section, however in Figure 8B, the cone has straight sides in cross-section.

The sealed working volume of the device is in the range of few ml (from 5 ml to 100 ml), which allows the device to be used in a laboratory environment and is suitable for applications requiring small treatment volumes (e.g. for biohazardous applications such as handling viruses, bacteria...). The device can operate as both a pump and a cavitation generator and is capable of self-priming. An important advantage of the developed device is its simplicity, as it has only one moving part and no rotating parts, which allows easy operation and cleaning.

Figure 9A shows schematically a magnetic field generated by a first example of a cavitation generator 10 having a ferromagnetic core according to the disclosed technology, for example, a ferromagnetic core configuration as shown in Figure 2A where there are no magnetic field concentrators and the coils are provided only on the main limbs. As shown in Figure 9A, the arrows represent the direction and flux density of the resulting magnetic field. Figure 9B shows another representation of flux density distribution with piston 18, which is now visible in the middle of the image. As shown in Figure 9B, there are highest flux densities in the main limbs.

Figure 10A shows schematically a magnetic field generated by a second example of a cavitation generator having a ferromagnetic core and field concentrators according to the disclosed technology, for example, a ferromagnetic core as shown in Figures 1A, 1B and 2B, where magnetic concentrators are attached to side limbs and the excitation coils are also wound around the main limbs on either side of the ferromagnetic core 26. Figure 10B shows schematically how the magnetic flux density of the example cavitation generator of Figure 10A is distributed, which generates electromagnetic forces which when exerted on the piston 18 shown in the centre of the image, cause the piston to rapidly accelerate along the line X-X' within the cavitation chamber until it collides with an end-wall 16 of the cavitation chamber and reverses direction, at which point the magnetic field causes it to accelerate towards the far end wall of the cavitation chamber.

Figure 11A shows schematically a magnetic field generated by a third example of a cavitation generator having a ferromagnetic core, field concentrators, and secondary windings according to the disclosed technology, for example a cavitation generator having a ferromagnetic core and cavitation chamber arrangement as shown in Figure 2C. In Figure 11A, the excitation coils 22a, 22b, are partially wound around main limbs 32a, 32b, and are also partially wound around field concentrating elements 34a, 34b to form secondary excitation coils 38a, 38b.

Figure 11B shows schematically how the magnetic flux density of the example cavitation generator of Figure 2C is distributed, which generates electromagnetic force exerted on the permanent magnet piston. In Figure 11B, the secondary windings 38a, 38b have further increased the force exerted on the piston 18 which has in turn increased the acceleration of the piston 18 as it moves in a linear direction up and down axis X-X' of the cavitation chamber 14 when compared to the acceleration the piston 18 experiences under the influence of the forces generated by the magnetic fields shown in the examples of Figures 9A and 10A. In the drawings, lighter colours correspond to stronger field strength, for example, in Figures 9B, 10B and 11B. In addition, in the Figures 9A, 10A and 11A, directional fields are shown by arrows, and different arrow length is indicative of a three dimensional field direction, for example, a shorter arrow indicates a field direction which is out of the two-dimensional plane of the image depicted in the drawing. The induced field within the permanent magnet piston 18 (shown as a dotted box within the cavitation chamber 14) is also shown in Figures 9A, 10A and 11A.

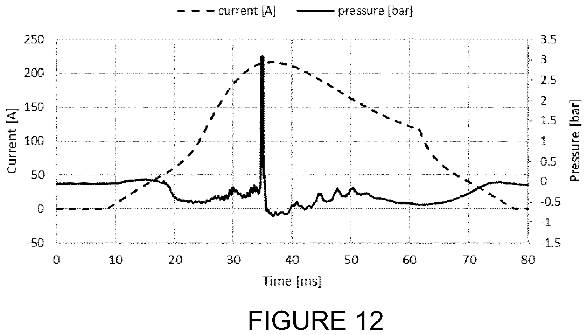

Figure 12 shows schematically how current through the coils and pressure within the cavitation chamber vary with time. This demonstrates schematically how current through the electromagnetic coils of an example embodiment of a cavitation generator 10 affects pressure in the liquid in which cavitation is being induced according to some embodiments of the disclosed technology. Figure 12 illustrates how by fine tuning the current towards the peak current shown at approximately 35ms the magnetic forces exerted on the piston 18 within the cavitation chamber 14 which cause the piston 18 to accelerate and decelerate within the cavitation chamber 14 produce a pressure peak in the cavitated liquid.

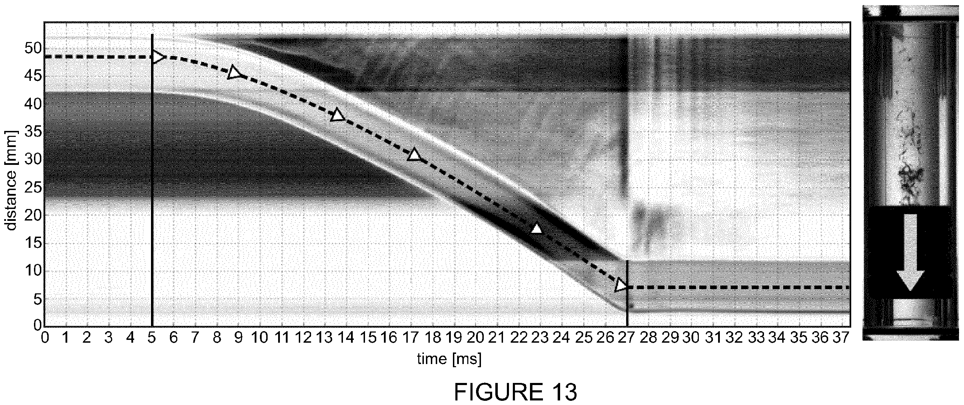

Figure 13 shows an example of how the piston decelerates when hitting an end wall 16a 16b and how this results in shockwaves. The main plot on the left-hand side of Figure 13 is an example of a deceleration curve of the piston, which generates a jet in the liquid and produces shockwaves causing cavitation in the liquid within the cavitation chamber. Figure 13 shows an example plot of piston distance within the cavitation chamber along axis X-X' plotted against time, where time zero represents one extreme end position of the cavitation chamber along the axis X-X'. The right-hand side of Figure 13 shows schematically how the curve illustrated corresponds to motion of the piston towards the cavitation chamber's end wall (which would correspond to the base of the image on the right-hand-side of Figure 13). As the distance vs. time plot of Figure 13 shows, as the piston 18 approaches an end wall (or damper in front of an end wall), it decelerates rapidly, causing a pressure drop (which may be exaggerated if a damper is used).

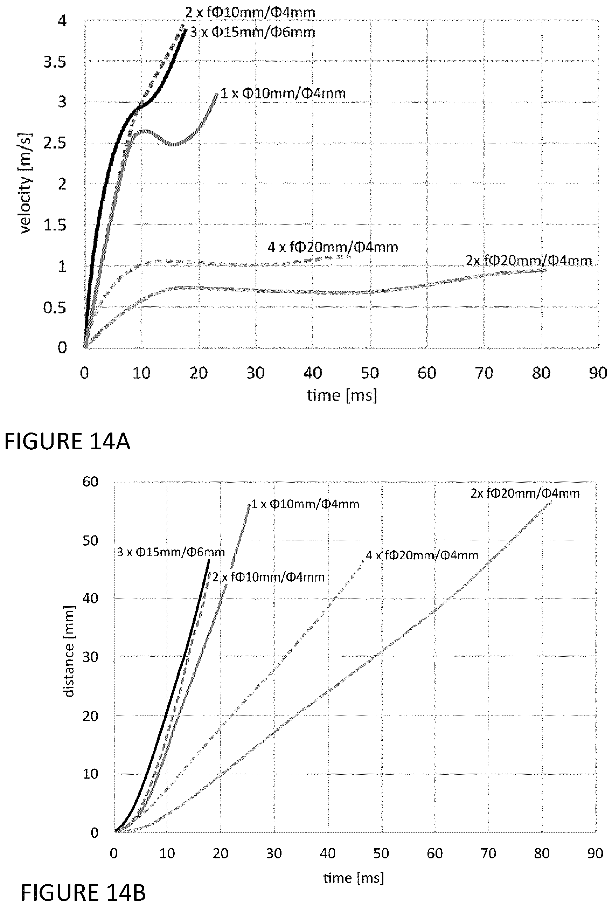

Figure 14A shows schematically examples of liquid jet velocity through piston apertures of various dimensions and various piston configurations, including examples of more than one magnet. Figure 14B shows schematically examples of piston distance travelled along the axis of the cavitation chamber as a function of time.

The disclosed technology includes a method of inducing cavitation in a liquid to be provided. For example, a method which comprises placing a liquid sample in a cavitation chamber 14 of a cavitation generator 10 according to any one of the disclosed embodiments and controlling a current through at least one of the excitation coils 22a, 22b, and/or 38a, 38b to generate an electromagnetic field which induces linear motion of the permanent magnet piston 18 within the cavitation chamber 14 until sufficient acceleration of the piston 18 occurs within the cavitation chamber 14 to result in shockwaves occurring in the liquid sample as the piston collides with end walls 16a, 16b of the cavitation chamber 14. The acceleration of the hollow piston 18 within the cavitation chamber also generates a liquid vapour jet through the piston aperture 20. The combination of the liquid vapour jet and the shockwaves results in high levels of cavitation, which may be more intense than the levels obtainable using known devices for the same sample size.

In some examples of the above method of inducing cavitation in a liquid, placing of a liquid sample in the cavitation chamber 14 comprises placing the liquid sample in the cavitation chamber via one end of the cavitation chamber from which an end wall has been removed. In this case, the method also comprises placing the hollow permanent magnet piston in the cavitation chamber prior to replacing the end wall of the cavitation chamber to seal the cavitation chamber so it does not leak. The sealed cavitation chamber may be placed within housing 12 and then placed back in position within the ferromagnetic core 26 of the cavitation generator 10 in some embodiments or alternatively, the cavitation chamber's housing 12 may be left in position within the ferromagnetic core 26 in some embodiments and the cavitation chamber 14 removed and replaced as required to change the liquid samples.

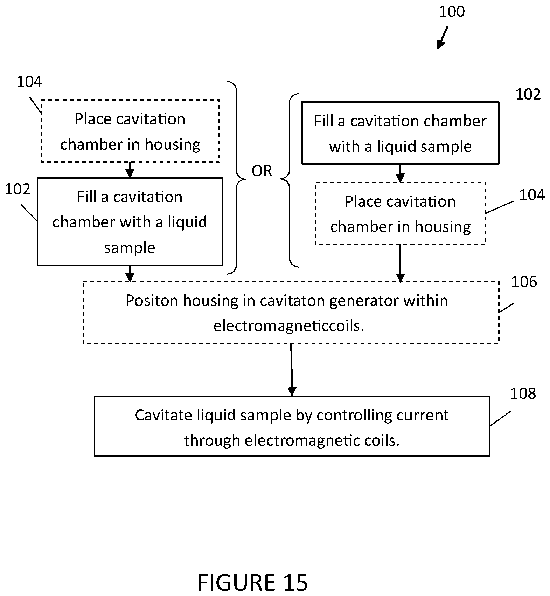

Figure 15 shows schematically examples of a method 100 of performing batch cavitation in a plurality of liquid samples, for example, using a cavitation system such as that disclosed here. On the left hand side of Figure 15, a removable cavitation chamber 14 is placed in a housing 12 of the cavitation generator 10 and then filled with the liquid sample to be cavitated. The right hand side of Figure 15 shows an example method where the cavitation chamber is first filled with a liquid sample and then the filled cavitation chamber is placed in the housing 12 of the cavitation generator 10. The method may be performed in series if only one cavitation chamber at a time is housed within the cavitation generator. The method 100 as illustrated on the right hand side of Figure 15 comprises filling 102 each of at least one respective cavitation chamber 14 according to the first aspect of any disclosed embodiments of a cavitation chamber with a liquid sample, positioning 106 a housing 12 including the filled cavitation chamber 14 between electromagnetic coils 22a, 22b of a cavitation generator 10 of a cavitation system according to the first aspect or any of the disclosed embodiments of a cavitation generator 10 and controlling 108 a current through the electromagnetic coils 22a, 22b using the bipolar pulse current controller 42 of the cavitation generator 10. The current is controlled so that sufficient force is applied to each permanent magnet piston 18 in the cavitation chamber 14 to accelerate the piston 18 sufficiently to cause a liquid jet to form within the liquid in the cavitation chamber 14 and to cause a shockwave when the piston decelerates when it collides with each end of the cavitation chamber 14 (either with the chamber end walls 16a, 16b or with a damper 36 provided just before each of the chamber end walls 16a, 16b).

In some embodiments, each of the at least one cavitation chambers 14 is located within the housing when the cavitation chamber 14 is filled as is shown in the method options on the left hand side of Figure 15. In some embodiments, however, the cavitation chamber 14 is placed 104 within the housing after the cavitation chamber 14 is filled 102 (see the right hand side of Figure 15).

In some embodiments, the housing is already positioned within the cavitation generator within the electromagnetic coils when the cavitation chamber is placed in the housing, in other words, step 106 may be optional and not required in some embodiments.

The above description describes examples of a cavitation system comprising a cavitation generator for inducing hydrodynamic cavitation in a liquid. The cavitation generator comprises a housing 12 with a cylindrical cavitation chamber 14. The cavitation chamber 14 includes a preferably hollow, preferably removable for cleaning, permanent magnet piston 18 in use. In some embodiments, the piston has at least one aperture 20 via which a liquid held within the cavitation chamber 14 passes through the piston as the piston 18 moves along the cavitation chamber 14 and at least two electromagnetic coils 22a, 22b provided at each end of the housing 12, the at least two electromagnetic coils 22a, 22b being configured when controlled by a bipolar pulse current controller to generate an electromagnetic force which drives the piston 18 to move in a linear manner bi-directionally along the longest axis 24 of the cavitation chamber 14. As the piston 18 is driven along the cavitation chamber 14, liquid held in the cavitation chamber 14 is accelerated as a jet through the aperture 20 of the piston 18. The liquid jet together with shockwaves caused by the rapid deceleration of the piston as it collides with each end of the cavitation chamber cause hydrodynamic cavitation in the liquid. The cavitation generator 10 is particularly suitable for homogenising small samples of liquids, for example, test-tube size samples of less than one or more of: 5ml, 10ml, 20ml, 50ml or 100ml. The use of only one moving part, the permanent magnet piston 18, within the cavitation chamber 14 makes it very simple to clean it, and the volume of liquid contained within the cavitation chamber 14 may be small enough for laboratory use in some embodiments where only very small samples of liquid are available.

The above embodiments are merely illustrative of preferred embodiments of the claimed invention. The scope of the invention is defined by the claims that follow.

## Claims

1. A cavitation chamber (14) for use in a cavitation system, the cavitation chamber (14) comprising:

   a container for holding a liquid and for housing a piston (18);
   two end-walls (16a, 16b), each end-wall (16a, 16b) provided at one end of the longest axis (24) of the container;
   an inlet for introducing the liquid into the container, wherein the inlet is configured to allow liquid to enter the container but not to escape;
   an outlet for removing liquid from the container, wherein the outlet is configured to allow liquid and gas to escape from the container but not to return; and
   at least one piston (18), housed in the container, **characterized in that** the piston comprises at least one permanent magnet, wherein the permanent magnet piston (18) is configured to cause cavitation in a liquid held in the container of the cavitation chamber (14) by being driven into linear movement between the end-walls (16a, 16b) of the container along the longest axis (24) by electromagnetic fields of a cavitation generator (10).

2. The cavitation chamber (14) of claim 1, wherein the permanent magnet piston (18) has at least one aperture (20) via which liquid held within the cavitation chamber (14) passes through and emerges as a liquid jet as the piston (18) is driven by the electromagnetic fields to move along the longest axis of the cavitation chamber (14).

3. The cavitation chamber (14) as claimed in either one of claims 1 or 2, wherein liquid held within the container of the cavitation chamber (14) passes through a gap between the permanent magnet piston (18) and an internal surface of the container housing the permanent magnet piston (18) and emerges as a liquid jet as the piston (18) is driven by the electromagnetic fields to move along the longest axis of the cavitation chamber (14).

4. The cavitation chamber (14) as claimed in claim 3, wherein an outer surface of the permanent magnet piston (18) is configured with grooves forming channels for the liquid to pass through between the permanent magnet piston (18) and the internal surface of the container housing the permanent magnet piston (18).

5. A cavitation chamber (14) as claimed in any previous one of claims 1 to 4, wherein a damper (36) is provided adjacent to each end wall (16a, 16b) of the cavitation chamber (14).

6. A cavitation chamber (14) as claimed in any one of claims 1 to 4, wherein the container of the cavitation chamber (14) is configured to be filled with a liquid before the cavitation chamber (14) is placed in the cavitation generator (10).

7. A cavitation system for inducing hydrodynamic cavitation in a liquid held in a cavitation chamber (14), the cavitation system comprising:

   a cavitation chamber (14) according to any one of claims 1 to 6, holding a liquid for cavitation using a permanent magnet piston (18); and
   a cavitation generator (10) having a housing (12) for the cavitation chamber (14); and
   wherein the cavitation generator (10) comprises:

   a ferromagnetic core (26); and
   a bipolar pulse current controller (42); and
   at least two electromagnetic coils (22a, 22b) arranged to accommodate between them the housing (12) including the cavitation chamber (14),
   wherein at least one electromagnetic coil (22a) is configured to generate an electromagnetic field at one end (16a) of the cavitation chamber (14) when in the housing (12) and at least one electromagnetic coil (22b) is configured to generate an electromagnetic field at the other end (16b) of the cavitation chamber (14), and

wherein the bipolar pulse current controller (42) is configured to generate bipolar current pulses, which alternate the polarity of the electromagnetic fields, generating electromagnetic force, wherein the electromagnetic force drives the piston (18) into linear motion bi-directionally between the one end (16a) and the other, opposite, end (16b) of the cavitation chamber (14) through the liquid held in the cavitation chamber (14) to induce cavitation in the liquid.

8. The cavitation system of claim 7, wherein the bipolar pulse current controller (42) controls current through the electromagnetic coils (22a, 22b) to cause the electromagnetic field generated by the at least one electromagnetic coil at one end of the cavitation chamber (14) to repel the permanent magnet piston (18) concurrently with the electromagnetic field at the other end attracting the piston (18) and to cause the electromagnetic field generated by the at least one electromagnetic coil at one end of the cavitation chamber (14) to attract the piston (18) concurrently with the electromagnetic field at the other end repelling the piston (18).

9. The cavitation system of claim 7 or claim 8, wherein the bipolar pulse current controller (42) causes the electromagnetic fields of the electromagnetic coils at both ends of the cavitation chamber (14) to cooperate with each other and cause the permanent magnet piston (18) to accelerate as it moves in each direction between the two ends (16a, 16b) of the cavitation chamber (14) to a velocity where liquid passing the moving permanent magnet piston (18) generates a liquid jet within the cavitation chamber (14).

10. The cavitation system of claim 9, wherein deceleration of the accelerated permanent magnet piston (18) as it collides with an end (16a, 16b) of the cavitation chamber (14) generates a shockwave in the liquid within the cavitation chamber (14).

11. The cavitation system of any one of claims 7 to 10, wherein the bipolar pulse current controller (42) generates a current having bipolar pulse waveform, which is repeated in a pulse train whilst the cavitation generator (10) is operating.

12. The cavitation system of any one of claims 7 to 11, wherein the housing (12) is configured with a cavitation chamber (14) which is fully filled with liquid when in place between the electromagnetic coils (22a, 22b) of the cavitation generator (10).

13. The cavitation system of any one of claims 7 to 12, wherein the ferromagnetic core (26) comprises two yokes, two side limbs (28a, 28b) and two main limbs (32a, 32b), each main limb supporting at least one electromagnetic coil (22a, 22b) in a manner which accommodates the housing (12) in a core aperture (30) between the coils (22a, 22b).

14. The cavitation system of claim 13, wherein the ferromagnetic core (26) further comprises at least two additional magnetic field concentrating elements (34a, 34b) configured to concentrate the electromagnetic fields generated by the at least two electromagnetic coils around the accommodated housing (12).

15. A method of performing batch cavitation in a plurality of liquid samples, the method comprising:

filling each of at least one respective cavitation chamber (14) according to any one of claims 1 to 6 with a liquid sample;
positioning a housing (12) including the filled cavitation chamber (14) between electromagnetic coils (22a, 22b) of a cavitation generator (10) in the cavitation system according to any one of claims 7 to 14; and
controlling a current through the electromagnetic coils (22a, 22b) using the bipolar pulse current controller (42) of the cavitation generator (10), wherein the current is controlled so that sufficient force is applied to each permanent magnet piston (18) in each respective cavitation chamber (14) to accelerate the permanent magnet piston (18) and induce cavitation in the liquid in the liquid samples.

16. The method of claim 15, wherein the method comprises filling cavitation chambers (14) according to any one of claims 1 to 5 with a liquid sample, wherein each of the at least one cavitation chambers (14) is located within the housing (12) within the cavitation generator (10) when the cavitation chamber (14) is filled.

17. The method of claim 15, wherein the method comprises filling cavitation chambers (14) according to any one of claims 1 to 5 with a liquid sample, wherein the container of the cavitation chamber (14) is configured to be filled with a liquid before the cavitation chamber (14) is placed in the cavitation generator (10), wherein each of the at least one cavitation chambers (14) is placed within the housing (12) within the cavitation generator (10) after the cavitation chamber (14) is filled.

**Patentansprüche**

1. Kavitationskammer (14) zur Verwendung in einem Kavitationssystem, wobei die Kavitationskammer (14) Folgendes umfasst:

einen Behälter zum Enthalten einer Flüssigkeit und zum Unterbringen eines Kolbens (18);
zwei Endwände (16a, 16b), wobei jede Endwand (16a, 16b) an einem Ende der längsten Achse (24) des Behälters bereitgestellt ist;
einen Einlass zum Einleiten der Flüssigkeit in den Behälter, wobei der Einlass dazu konfiguriert ist, es der Flüssigkeit zu ermöglichen, in den Behälter einzutreten, aber nicht zu entweichen;
einen Auslass zum Entfernen der Flüssigkeit aus dem Behälter, wobei der Auslass dazu konfiguriert ist, es einer Flüssigkeit und einem Gas zu ermöglichen, aus dem Behälter zu entweichen, aber nicht zurückzukehren; und
mindestens einen Kolben (18), der in dem Behälter untergebracht ist, **dadurch gekennzeichnet, dass** der Kolben mindestens einen Permanentmagneten umfasst, wobei der Permanentmagnetkolben (18) dazu konfiguriert ist, eine Kavitation in einer Flüssigkeit zu veranlassen, die in dem Behälter der Kavitationskammer (14) enthalten ist, indem er durch elektromagnetische Felder eines Kavitationsgenerators (10) in eine lineare Bewegung zwischen den Endwänden (16a, 16b) des Behälters entlang der längsten Achse (24) angetrieben wird.

2. Kavitationskammer (14) nach Anspruch 1, wobei der Permanentmagnetkolben (18) mindestens eine Öffnung (20) aufweist, durch die eine Flüssigkeit, die innerhalb der Kavitationskammer (14) enthalten ist, hindurchläuft und als ein Flüssigkeitsstrahl austritt, während der Kolben (18) durch die elektromagnetischen Felder angetrieben wird, um sich entlang der längsten Achse der Kavitationskammer (14) zu bewegen.

3. Kavitationskammer (14) nach einem der Ansprüche 1 oder 2, wobei eine Flüssigkeit, die innerhalb des Behälters der Kavitationskammer (14) enthalten ist, durch einen Spalt zwischen dem Permanentmagnetkolben (18) und einer Innenfläche des Behälters hindurchläuft, der den Permanentmagnetkolben (18) unterbringt, und als ein Flüssigkeitsstrahl austritt, während der Kolben (18) durch die elektromagnetischen Felder angetrieben wird, um sich entlang der längsten Achse der Kavitationskammer (14) zu bewegen.

4. Kavitationskammer (14) nach Anspruch 3, wobei eine Außenfläche des Permanentmagnetkolbens (18) mit Nuten konfiguriert ist, die Kanäle für die Flüssigkeit bilden, um zwischen dem Permanentmagnetkolben (18) und der Innenfläche des Behälters hindurchzulaufen, der den Permanentmagnetkolben (18) unterbringt.

5. Kavitationskammer (14) nach einem der vorhergehenden Ansprüche 1 bis 4, wobei ein Dämpfer (36) benachbart zu jeder Endwand (16a, 16b) der Kavitationskammer (14) bereitgestellt ist.

6. Kavitationskammer (14) nach einem der Ansprüche 1 bis 4, wobei der Behälter der Kavitationskammer (14) dazu konfiguriert ist, mit einer Flüssigkeit gefüllt zu werden, bevor die Kavitationskammer (14) in den Kavitationsgenerator (10) eingesetzt wird.

7. Kavitationssystem zum Induzieren einer hydrodynamischen Kavitation in einer Flüssigkeit, die in einer Kavitationskammer (14) enthalten ist, wobei das Kavitationssystem Folgendes umfasst:

eine Kavitationskammer (14) nach einem der Ansprüche 1 bis 6, die eine Flüssigkeit zur Kavitation unter Verwendung eines Permanentmagnetkolbens (18) enthält; und
einen Kavitationsgenerator (10), der ein Gehäuse (12) für die Kavitationskammer (14) aufweist; und
wobei der Kavitationsgenerator (10) Folgendes umfasst:

einen ferromagnetischen Kern (26); und
eine bipolare Impulsstromsteuerung (42); und
mindestens zwei elektromagnetische Spulen (22a, 22b), die dazu angeordnet sind, zwischen sich das Gehäuse (12) aufzunehmen, das die Kavitationskammer (14) beinhaltet, wobei mindestens eine elektromagnetische Spule (22a) dazu konfiguriert ist, ein elektromagnetisches Feld an einem Ende (16a) der Kavitationskammer (14) zu generieren, wenn sie sich in dem Gehäuse (12) befindet, und mindestens eine elektromagnetische Spule (22b) dazu konfiguriert ist, ein elektromagnetisches Feld an dem anderen Ende (16b) der Kavitationskammer (14) zu generieren, und
wobei die bipolare Impulsstromsteuerung (42) dazu konfiguriert ist, bipolare Stromimpulse zu generieren, welche die Polarität der elektromagnetischen Felder abwechseln, wodurch eine elektromagnetische Kraft generiert wird, wobei die elektromagnetische Kraft den Kolben (18) in eine lineare Bewegung bidirektional zwischen dem einen Ende (16a) und dem anderen, gegenüberliegenden Ende (16b) der Kavitationskammer (14) durch die Flüssigkeit, die in der Kavitationskammer (14) enthalten ist, antreibt, um eine Kavitation in der Flüssigkeit zu induzieren.

8. Kavitationssystem nach Anspruch 7, wobei die bipolare Impulsstromsteuerung (42) Strom durch die elektromagnetischen Spulen (22a, 22b) steuert, um das elektromagnetische Feld, das durch die mindestens eine elektromagnetische Spule an einem Ende der Kavitationskammer (14) generiert wird, dazu zu veranlassen, den Permanentmagnetkolben (18) abzustoßen, während das elektromagnetische Feld an dem anderen Ende den Kolben (18) gleichzeitig anzieht, und das elektromagnetische Feld, das durch die mindestens eine elektromagnetische Spule an einem Ende der Kavitationskammer (14) generiert wird, dazu zu veranlassen, den Kolben (18) anzuziehen, während das elektromagnetische Feld an dem anderen Ende den Kolben (18) gleichzeitig abstößt.

9. Kavitationssystem nach Anspruch 7 oder Anspruch 8, wobei die bipolare Impulsstromsteuerung (42) die elektromagnetischen Felder der elektromagnetischen Spulen an beiden Enden der Kavitationskammer (14) dazu veranlasst, miteinander zusammenzuwirken, und den Permanentmagnetkolben (18) dazu veranlasst, bei seiner Bewegung in jede Richtung zwischen den beiden Enden (16a, 16b) der Kavitationskammer (14) auf eine Geschwindigkeit zu beschleunigen, bei der eine Flüssigkeit, die den sich bewegenden Permanentmagnetkolben (18) durchläuft, einen Flüssigkeitsstrahl innerhalb der Kavitationskammer (14) generiert.

10. Kavitationssystem nach Anspruch 9, wobei eine Abbremsung des beschleunigten Permanentmagnetkolbens (18) bei seinem Zusammenstoß mit einem Ende (16a, 16b) der Kavitationskammer (14) eine Stoßwelle in der Flüssigkeit innerhalb der Kavitationskammer (14) generiert.

11. Kavitationssystem nach einem der Ansprüche 7 bis 10, wobei die bipolare Impulsstromsteuerung (42) einen Strom generiert, der eine bipolare Impulswellenform aufweist, die in einer Impulsfolge wiederholt wird, während der Kavitationsgenerator (10) in Betrieb ist.

12. Kavitationssystem nach einem der Ansprüche 7 bis 11, wobei das Gehäuse (12) mit einer Kavitationskammer (14) konfiguriert ist, die vollständig mit Flüssigkeit gefüllt ist, wenn sie sich zwischen den elektromagnetischen Spulen (22a, 22b) des Kavitationsgenerators (10) befindet.

13. Kavitationssystem nach einem der Ansprüche 7 bis 12, wobei der ferromagnetische Kern (26) zwei Joche, zwei Seitenschenkel (28a, 28b) und zwei Hauptschenkel (32a, 32b) umfasst, wobei jeder Hauptschenkel mindestens eine elektromagnetische Spule (22a, 22b) in einer Weise trägt, die das Gehäuse (12) in einer Kernöffnung (30) zwischen den Spulen (22a, 22b) aufnimmt.

14. Kavitationssystem nach Anspruch 13, wobei der ferromagnetische Kern (26) ferner mindestens zwei zusätzliche Magnetfeldkonzentrationselemente (34a, 34b) umfasst, die dazu konfiguriert sind, die elektromagnetischen Felder, die durch die mindestens zwei elektromagnetischen Spulen generiert werden, um das aufgenommene Gehäuse (12) herum zu konzentrieren.

15. Verfahren zum Durchführen einer Batch-Kavitation in einer Vielzahl von Flüssigkeitsproben, wobei das Verfahren Folgendes umfasst:

    Füllen jeder von mindestens einer jeweiligen Kavitationskammer (14) nach einem der Ansprüche 1 bis 6 mit einer Flüssigkeitsprobe;
    Positionieren eines Gehäuses (12), das die gefüllte Kavitationskammer (14) zwischen elektromagnetischen Spulen (22a, 22b) eines Kavitationsgenerators (10) in dem Kavitationssystem nach einem der Ansprüche 7 bis 14 beinhaltet; und
    Steuern eines Stroms durch die elektromagnetischen Spulen (22a, 22b) unter Verwendung der bipolaren Impulsstromsteuerung (42) des Kavitationsgenerators (10), wobei der Strom so gesteuert wird, dass eine ausreichende Kraft auf jeden Permanentmagnetkolben (18) in jeder jeweiligen Kavitationskammer (14) ausgeübt wird, um den Permanentmagnetkolben (18) zu beschleunigen und die Kavitation in der Flüssigkeit in den Flüssigkeitsproben zu induzieren.

16. Verfahren nach Anspruch 15, wobei das Verfahren Füllen von Kavitationskammern (14) nach einem der Ansprüche 1 bis 5 mit einer Flüssigkeitsprobe umfasst, wobei sich jede der mindestens einen Kavitationskammer (14) innerhalb des Gehäuses (12) innerhalb des Kavitationsgenerators (10) befindet, wenn die Kavitationskammer (14) gefüllt wird.

17. Verfahren nach Anspruch 15, wobei das Verfahren Füllen von Kavitationskammern (14) nach einem der Ansprüche 1 bis 5 mit einer Flüssigkeitsprobe umfasst, wobei der Behälter der Kavitationskammer (14) dazu konfiguriert ist, mit einer Flüssigkeit gefüllt zu werden, bevor die Kavitationskammer (14) in den Kavitationsgenerator (10) eingesetzt wird, wobei jede der mindestens einen Kavitationskammer (14) innerhalb des Gehäuses (12) innerhalb des Kavitationsgenerators (10) eingesetzt wird, nachdem die Kavitationskammer (14) gefüllt ist.

## Revendications

1. Chambre de cavitation (14) destinée à être utilisée dans un système de cavitation, la chambre de cavitation (14) comprenant :

   un récipient pour contenir un liquide et pour loger un piston (18) ;
   deux parois d'extrémité (16a, 16b), chaque paroi d'extrémité (16a, 16b) étant prévue à une extrémité de l'axe le plus long (24) du récipient ;
   une entrée pour introduire le liquide dans le récipient, dans laquelle l'entrée est configurée pour permettre à du liquide d'entrer dans le récipient, mais pas de s'échapper ;
   une sortie pour retirer du liquide du récipient, dans laquelle la sortie est configurée pour permettre à du liquide et à du gaz de s'échapper du récipient, mais pas de revenir ; et
   au moins un piston (18), logé dans le récipient, **caractérisé en ce que** le piston comprend au moins un aimant permanent, dans laquelle le piston à aimant permanent (18) est configuré pour provoquer une cavitation dans un liquide contenu dans le récipient de la chambre de cavitation (14) en étant entraîné dans un mouvement linéaire entre les parois d'extrémité (16a, 16b) du récipient le long de l'axe le plus long (24) par les champs électromagnétiques d'un générateur de cavitation (10) .

2. Chambre de cavitation (14) selon la revendication 1, dans laquelle le piston à aimant permanent (18) a au moins une ouverture (20) à travers laquelle le liquide contenu à l'intérieur de la chambre de cavitation (14) passe et émerge sous la forme d'un jet de liquide lorsque le piston (18) est entraîné par les champs électromagnétiques pour se déplacer le long de l'axe le plus long de la chambre de cavitation (14).

3. Chambre de cavitation (14) selon l'une des revendications 1 ou 2, dans laquelle le liquide contenu à l'intérieur du récipient de la chambre de cavitation (14) passe à travers un espace entre le piston à aimant permanent (18) et une surface interne du récipient logeant le piston à aimant permanent (18) et émerge sous la forme d'un jet de liquide lorsque le piston (18) est entraîné par les champs électromagnétiques pour se déplacer le long de l'axe le plus long de la chambre de cavitation (14).

4. Chambre de cavitation (14) selon la revendication 3, dans laquelle une surface externe du piston à aimant permanent (18) est configurée avec des rainures formant des canaux pour que le liquide puisse passer entre le piston à aimant permanent (18) et la surface interne du récipient logeant le piston à aimant permanent (18).

5. Chambre de cavitation (14) selon l'une quelconque des revendications 1 à 4, dans laquelle un amortisseur (36) est prévu adjacent à chaque paroi d'extrémité (16a, 16b) de la chambre de cavitation (14).

6. Chambre de cavitation (14) selon l'une quelconque des revendications 1 à 4, dans laquelle le récipient de la chambre de cavitation (14) est configuré pour être rempli d'un liquide avant que la chambre de cavitation (14) ne soit placée dans le générateur de cavitation (10).

7. Système de cavitation pour induire une cavitation hydrodynamique dans un liquide contenu dans une chambre de cavitation (14), le système de cavitation comprenant :

   une chambre de cavitation (14) selon l'une quelconque des revendications 1 à 6, contenant un liquide pour la cavitation à l'aide d'un piston à aimant permanent (18) ; et
   un générateur de cavitation (10) présentant un boîtier (12) pour la chambre de cavitation (14) ; et
   dans lequel le générateur de cavitation (10) comprend :

   un noyau ferromagnétique (26) ; et
   un dispositif de commande de courant d'impulsion bipolaire (42) ; et
   au moins deux bobines électromagnétiques (22a, 22b) agencées pour accueillir entre elles le boîtier (12) comportant la chambre de cavitation (14), dans lequel au moins une bobine électromagnétique (22a) est configurée pour générer un champ électromagnétique à une extrémité (16a) de la chambre de cavitation (14) lorsqu'elle se trouve dans le boîtier (12) et au moins une bobine électromagnétique (22b) est configurée pour générer un champ électromagnétique à l'autre extrémité (16b) de la chambre de cavitation (14), et
   dans lequel le dispositif de commande de courant d'impulsion bipolaire (42) est configuré pour générer des impulsions de courant bipolaires, qui alternent la polarité des champs électromagnétiques, générant une force électromagnétique, dans lequel la force électromagnétique entraîne le piston (18) dans un mouvement linéaire bidirectionnel entre la première extrémité (16a) et l'autre extrémité opposée (16b) de la chambre de cavitation (14) à travers le liquide contenu dans la chambre de cavitation (14) pour induire une cavitation dans le liquide.

8. Système de cavitation selon la revendication 7, dans lequel le dispositif de commande de courant d'impulsion bipolaire (42) commande le courant à travers les bobines électromagnétiques (22a, 22b) pour amener le champ électromagnétique généré par l'au moins une bobine électromagnétique à une extrémité de la chambre de cavitation (14) à repousser le piston à aimant permanent (18) simultanément avec le champ électromagnétique à l'autre extrémité attirant le piston (18) et pour amener le champ électromagnétique généré par l'au moins une bobine électromagnétique à une extrémité de la chambre de cavitation (14) à attirer le piston (18) simultanément avec le champ électromagnétique à l'autre extrémité repoussant le piston (18).

9. Système de cavitation selon la revendication 7 ou la revendication 8, dans lequel le dispositif de commande de courant d'impulsion bipolaire (42) amène les champs électromagnétiques des bobines électromagnétiques aux deux extrémités de la chambre de cavitation (14) à coopérer l'un avec l'autre et amènent le piston à aimant permanent (18) à accélérer lorsqu'il se déplace dans chaque direction entre les deux extrémités (16a, 16b) de la chambre de cavitation (14) jusqu'à une vitesse où le liquide passant le piston à aimant permanent mobile (18) génère un jet de liquide à l'intérieur de la chambre de cavitation (14).

10. Système de cavitation selon la revendication 9, dans lequel la décélération du piston à aimant permanent accéléré (18) lorsqu'il entre en collision avec une extrémité (16a, 16b) de la chambre de cavitation (14) génère une onde de choc dans le liquide à l'intérieur de la chambre de cavitation (14).

11. Système de cavitation selon l'une quelconque des revendications 7 à 10, dans lequel le dispositif de commande de courant d'impulsion bipolaire (42) génère un courant ayant une forme d'onde d'impulsion bipolaire, qui est répété dans un train d'impulsions pendant que le générateur de cavitation (10) fonctionne.

12. Système de cavitation selon l'une quelconque des revendications 7 à 11, dans lequel le boîtier (12) est configuré avec une chambre de cavitation (14) qui est entièrement remplie de liquide lorsqu'elle est en place entre les bobines électromagnétiques (22a, 22b) du générateur de cavitation (10).

13. Système de cavitation selon l'une quelconque des revendications 7 à 12, dans lequel le noyau ferromagnétique (26) comprend deux culasses, deux branches latérales (28a, 28b) et deux branches principales (32a, 32b), chaque branche principale supportant au moins une bobine électromagnétique (22a, 22b) de manière à accueillir le boîtier (12) dans une ouverture centrale (30) entre les bobines (22a, 22b).

14. Système de cavitation selon la revendication 13, dans lequel le noyau ferromagnétique (26) comprend également au moins deux éléments de concentration de champ magnétique supplémentaires (34a, 34b) configurés pour concentrer les champs électromagnétiques générés par les au moins deux bobines électromagnétiques autour du boîtier accueilli (12).

15. Procédé pour réaliser une cavitation discontinue dans une pluralité d'échantillons liquides, le procédé comprenant :

le remplissage de chacune d'au moins une chambre de cavitation (14) respective selon l'une quelconque des revendications 1 à 6 avec un échantillon liquide ;
le positionnement d'un boîtier (12) comportant la chambre de cavitation remplie (14) entre des bobines électromagnétiques (22a, 22b) d'un générateur de cavitation (10) dans le système de cavitation selon l'une quelconque des revendications 7 à 14 ; et
la commande d'un courant à travers les bobines électromagnétiques (22a, 22b) à l'aide du dispositif de commande de courant d'impulsion bipolaire (42) du générateur de cavitation (10), dans lequel le courant est commandé de telle sorte qu'une force suffisante soit appliquée à chaque piston à aimant permanent (18) dans chaque chambre de cavitation respective (14) pour accélérer le piston à aimant permanent (18) et induire une cavitation dans le liquide présent dans les échantillons liquides.

16. Procédé selon la revendication 15, dans lequel le procédé comprend le remplissage de chambres de cavitation (14) selon l'une quelconque des revendications 1 à 5 avec un échantillon liquide, dans lequel chacune de l'au moins une chambre de cavitation (14) est située à l'intérieur du boîtier (12) à l'intérieur du générateur de cavitation (10) lorsque la chambre de cavitation (14) est remplie.

17. Procédé selon la revendication 15, dans lequel le procédé comprend le remplissage de chambres de cavitation (14) selon l'une quelconque des revendications 1 à 5 avec un échantillon liquide, dans lequel le récipient de la chambre de cavitation (14) est configuré pour être rempli d'un liquide avant que la chambre de cavitation (14) ne soit placée dans le générateur de cavitation (10), dans lequel chacune de l'au moins une chambre de cavitation (14) est placée à l'intérieur du boîtier (12) à l'intérieur du générateur de cavitation (10) une fois que la chambre de cavitation (14) soit remplie.

FIGURE 1A

FIGURE 1B

FIGURE 2A

FIGURE 2B

FIGURE 2C

26

16a

30

16b

10

38a

22a

14

18

22b

X

32a

32b

XX

38b

40

FIGURE 4A

42

22a

22b

a1

b1

b2

a2

I

Imax

dI/dt

t

FIGURE 4B

FIGURE 3A

EP 4 197 653 B1

FIGURE 3B

EP 4 197 653 B1

FIGURE 5A

FIGURE 5B

FIGURE 5C

FIGURE 5D

FIGURE 6

FIGURE 7

FIGURE 8A

FIGURE 8B

FIGURE 9A

FIGURE 9B

FIGURE 10A

EP 4 197 653 B1

FIGURE 10B

FIGURE 11A

FIGURE 11B

FIGURE 12

FIGURE 13

FIGURE 14A

FIGURE 14B

100

104

Place cavitation
chamber in housing

102

Fill a cavitation chamber
with a liquid sample

OR

102

Fill a cavitation
chamber with a liquid
sample

Place cavitation
chamber in housing

104

106

Positon housing in cavitaton generator within
electromagneticcoils.

108

Cavitate liquid sample by controlling current
through electromagnetic coils.

FIGURE 15

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4511254 A
- US 7547133 B
- US 2015336067 A
- US 2006159560 A